(19) Europäisches Patentamt
European Patent Office
Office européen des brevets

(11) Numéro de publication: **0 397 582 B1**

(12) **FASCICULE DE BREVET EUROPEEN**

(45) Date de publication de fascicule du brevet: **14.12.94**

(51) Int. Cl.$^5$: **C08G 73/12**

(21) Numéro de dépôt: **90420172.0**

(22) Date de dépôt: **04.04.90**

Le dossier contient des informations techniques présentées postérieurement au dépôt de la demande et ne figurant pas dans le présent fascicule.

# (54) Polymères à groupements imides faits à partir de diamines encombrées.

(30) Priorité: **10.04.89 FR 8904935**

(43) Date de publication de la demande: **14.11.90 Bulletin 90/46**

(45) Mention de la délivrance du brevet: **14.12.94 Bulletin 94/50**

(84) Etats contractants désignés: **AT BE CH DE DK ES FR GB GR IT LI LU NL SE**

(56) Documents cités:
**EP-A- 0 059 434**
**EP-A- 0 274 968**
**FR-A- 2 609 467**

(73) Titulaire: **CIBA-GEIGY AG**
**Klybeckstrasse 141**
**CH-4002 Basel (CH)**

(72) Inventeur: **Camberlin, Yves**
**68 bis, quai Clemenceau**
**F-69300 Caluire (FR)**
Inventeur: **Arpin, René**
**29, rue du Commandant Faurax**
**F-69006 Lyon (FR)**

EP 0 397 582 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

Dans la demande de brevet français FR-A-2.608.613 on a décrit et revendiqué des polymères à groupements imides, pouvant se trouver sous forme de prépolymères thermodurcissables, qui comprennent le produit de réaction, à une température allant de 50 °C à 300 °C, entre :

- (a) un N,N'-bis-imide ou une association de plusieurs bis-imides de formule :

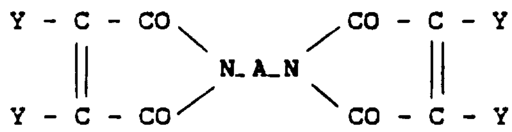

(I)

dans laquelle :

. les symboles Y, identiques ou différents, représentent chacun H, $CH_3$ ou Cl ;

. le symbole A représente un radical divalent choisi dans le groupe constitué par les radicaux : cyclohexylène ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

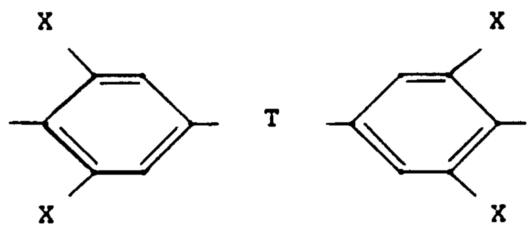

dans laquelle T représente un lien valentiel simple ou un groupement :

$-CH_2-$ ;

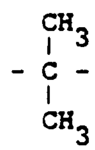 ;

- O - ;

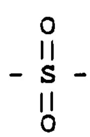 ; 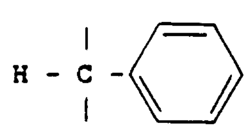 ; 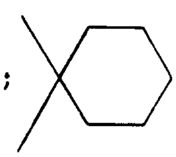 ;

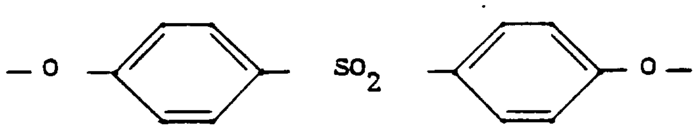

et les symboles X, identiques ou différents, représentent chacun un atome d'hydrogène, un radical méthyle, éthyle ou isopropyle ;

- (b) une ou plusieurs diamine(s) biprimaire(s) encombrée(s) prise(s) dans le groupe formé par :

(i) les espèces répondant à la formule générale :

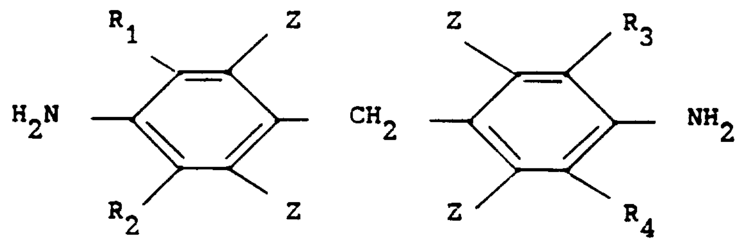

(II)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydogène ou un atome de chlore ;

(2i) et les espèces répondant à la formule générale :

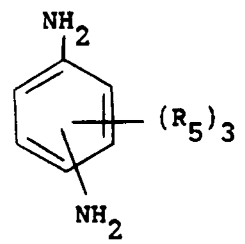

(III)

dans laquelle :

. les radicaux amino sont en position méta ou para, l'un par rapport à l'autre ;

. les symboles $R_5$, identiques ou différents, représentent chacun un radical méthyle, éthyle, propyle ou isopropyle ;

- (c) éventuellement un ou plusieurs monomère(s) non halogéné(s) autre(s) qu'un bis-imide de formule (I) et comprenant une ou plusieurs double(s) liaison(s) carbone-carbone polymérisable(s) ;
- et (d) éventuellement un composé de type imidazole.

Un premier avantage lié à la mise en oeuvre de l'invention conforme à la demande française précitée provient de l'encombrement stérique du réactif aminé (b) qui est responsable d'une réactivité plus faible des constituants du milieu de polymérisation, par comparaison avec ce qui se passe avec les polyamino-bis maléimides issus de diamines non encombrées. Cette réactivité plus faible des constituants du milieu de polymérisation présente un intérêt particulier non seulement pour la réalisation de pièces faisant appel à une mise en oeuvre d'un prépolymère à l'état fondu, mais encore pour la réalisation de pièces faisant appel à une mise en oeuvre d'un prépolymère sous forme de solution dans un solvant. En effet, la viscosité du prépolymère à l'état fondu ou celle de la solution du prépolymère évolue plus faiblement et cela facilite grandement la mise en oeuvre du prépolymère, notamment dans des applications nécessitant une durée de travail de plusieurs heures.

Un second avantage lié à la mise en oeuvre de l'invention conforme à la demande française précitée réside dans le fait que les polymères sont préparés sans prendre des précautions particulières sur le plan de l'hygiène étant donné que les diamines encombrées (b) employées ne présentent pas les risques de toxicité qui sont attachés en général aux diamines biprimaires aromatiques non encombrées.

EP-A-059434 décrit des polymères à groupements imides obtenus par réaction d'un bisimide, d'une diamine aromatique non encombrée, d'une guanamine substituée et d'une résine époxyde.

Il a maintenant été trouvé, et c'est ce qui constitue un premier objet de la présente invention, que l'on peut apporter des améliorations particulières à la technique décrite dans la demande française précitée par l'ajout, dans le milieu de préparation des polymères conformes à cette technique antérieure de deux ingrédients supplémentaires :

- l'un consistant dans au moins une diamine biprimaire hétérocyclique choisie dans la famille des guanamines (ou diamino-s-triazines) : cette mesure permet d'augmenter la réactivité des constituants (a), (b) et éventuellement (c) du milieu de polymérisation et elle autorise l'acquisition pour les objets moulés ou conformés obtenus de propriétés situées à des valeurs élevées sans avoir besoin de

procéder après durcissement du prépolymère à une phase de post-cuisson (ou de recuit) à haute température pendant une durée variant selon la température adoptée d'une dizaine d'heures à plusieurs dizaines d'heures. On constate encore que lesdites valeurs élevées obtenues pour les propriétés sont assez proches (et même peuvent être aussi bonnes), et cela constitue un résultat tout à fait inattendu, des (que les) valeurs optimales obtenues pour ces propriétés quand on opère selon là technique antérieure décrite en absence de guanamine et en réalisant une phase de post-cuisson ;

- l'autre consistant dans un composé choisi dans le groupe constitué par : (f1) une résine époxy chlorée ou bromée ; (f2) un N,N'-alkylène-bis-tétrahalogénophtalimide ; (f3) un produit contenant deux radicaux phényle reliés directement par un lien valentiel simple, un groupement divalent ou un atome, dans lequel chaque radical phényle est substitué par un radical (méth)allyloxy et par au moins deux atomes de chlore ou de brome ; (f4) une résine époxy non halogénée ; et (f5) un mélange de deux ou de plus de deux des composés précités entre eux à l'exception de toutes les combinaisons, qui se composent seulement de (f2) ou/et (f3); cette mesure permet d'obtenir notamment un faible coefficient d'expansion thermique pour les polymères qui sont ainsi préparés ainsi que, dans le cas où un composé halogéné est utilisé, une excellente résistance a la combustion

Il a encore été trouvé, et c'est ce qui constitue un autre objet de la présente invention, que le choix des diamines biprimaires encombrées utilisables dans la présente invention peut être élargi à des espèces du type de celles de formule (II) contenant deux radicaux (amino-4) phényle encombrés, mais reliés, cette foie entre eux par un groupement divalent autre que $-CH_2-$.

Plus précisément, la présente invention concerne des polymères à groupements imides qui comprennent le produit de réaction, à une température allant de 50 °C a 300 °C, entre :

- (a) un N,N' -bis-imide ou une association de plusieurs bis-imides répondant à la formule (I) et aux définitions données ci-avant ;
- (b) une ou plusieurs diamine(s) biprimaire(s) aromatique(s) encombrée (s) ; et
- éventuellement (c) un ou plusieurs monomère(s) non halogéné(s) autre(s) qu'un bis-imide de formule (I) et comportant une ou plusieurs double(s) liaison(s) carbone-carbone polymérisable(s) ; et
- éventuellement encore (d) un composé de type imidazole, lesdits polymères à groupements imides étant caractérisés par les points suivants :
  - point 1 : le milieu de réaction qui sert à les préparer contient en tant que réactif aminé (b) une ou plusieurs diamine(s) biprimaire(s) encombrée(s) prise(s) dans le groupe formé par :
    (i) les espèces répondant à la formule générale :

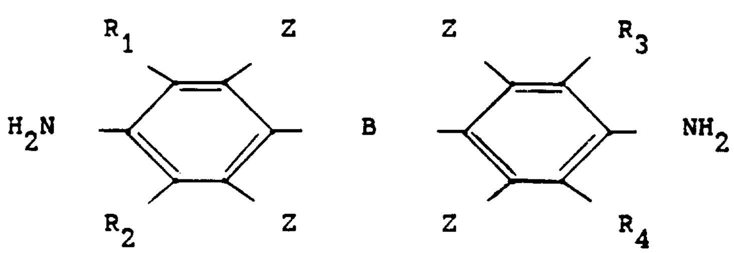

(IV)

dans laquelle :

. les symboles $R_1$, $R_2$, $R_3$ et $R_4$, identiques ou différents, représentent chacun un radical méthyle, éthyle, propyle ou isopropyle ;
. les symboles Z, identiques ou différents, représentent chacun un atome d'hydogène ou un atome de chlore ;
. le symbole B représente un radical divalent choisi dans le groupe formé par les radicaux : $-CH_2-$ ;

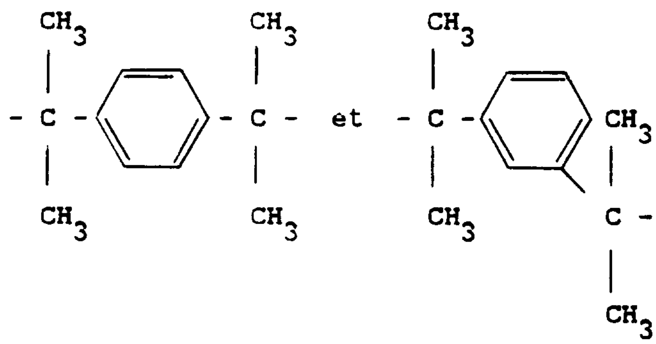

(2i) et les espèces répondant à la formule générale :

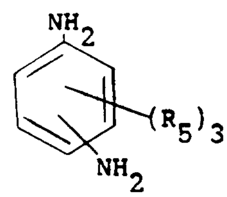

(III)

dans laquelle :

. les radicaux amino sont en position méta ou para, l'un par rapport à l'autre ;

. les symboles $R_5$, identiques ou différents, représentent chacun un radical méthyle, éthyle, propyle ou isopropyle ;

- point 2 : le milieu de réaction contient en outre deux additifs obligatoires (e) et (f) :

. (e) consistant dans une ou plusieurs guanamine(s) substituée(s) de formule :

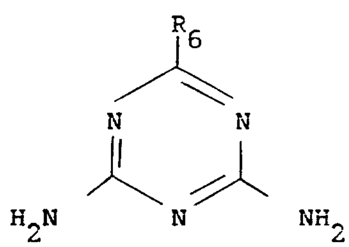

(V)

dans laquelle le symbole $R_6$ représente : un radical alkyle, linéaire ou ramifié, comportant de 1 à 12 atomes de carbone, comme par exemple un radical méthyle, éthyle, propyle, butyle, pentyle, hexyle, heptyle, octyle, monyle, décyle, undécyle ou dodécyle ; un radical alkoxy comportant de 1 à 12 atomes de carbone ; un radical phényle éventuellement substitué par 1 à 3 radicaux alkyle ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyle ayant de 1 à 3 atomes de carbone ;

. (f) consistant dans un composé choisi dans le groupe formé par:

* (f1) une résine époxy chlorée ou bromée ;

* (f2) un N,N'-alkylène-bis-tétrahalogénophtalimide de formule :

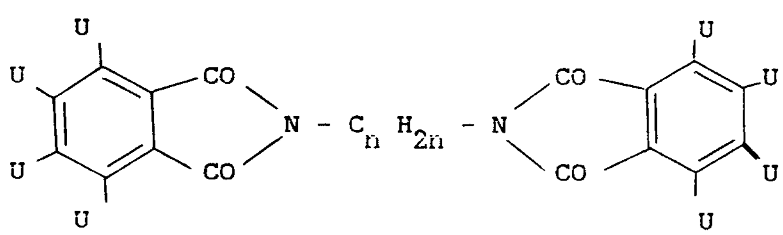

(VI)

dans laquelle :

. les symboles U, identiques ou différents, représentent chacun un atome de chlore ou de brome ;

. le radical alkylène $-C_n H_{2n}-$ peut être linéaire ou ramifié ;

. n est un nombre entier égal à 1, 2, 3 ou 4 ;

* (f3) un produit halogéné de formule :

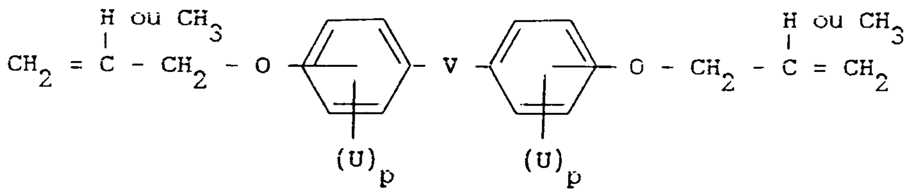

(VII)

dans laquelle :

. les symboles U ont la signification donnée ci-avant ;

. le symbole V représente un lien valentiel simple, un radical alkylène $-C_n H_{2n}-$, linéaire ou ramifié, avec n étant égal à 1, 2, 3 ou 4 ou un atome d'oxygène ;

. p est un nombre entier égal à 2, 3 ou 4 ;

* (f4) une résine époxy non halogénée ;

* et (f5) un mélange de deux ou de plus de deux des composés (f1) à (f4) précité entre eux, à l'exception de toutes les combinaisons, qui se composent seulement de (f2) ou/et (f3);

les quantités de N',N-bis-imide(s) (a) et de diamine(s) encombrées (b) étant choisies de façon à ce que le raport r:

$$\frac{\text{nombre de moles de bis-imide(s) (a)}}{\text{nombre de moles de diamine(s) (b)}}$$

se situe dans l'intervalle allant de 1,5/1 à 20/1;

la quantité de l'additif (e) représentant 2% à 30% du poids du mélange bis-imide(s) (a) + diamine(s) (b) + additif (f) + eventuellement réactif (c), la quantité de l'additif (f) représentant 2% à 30% du poids du mélange bis-imide(s) (a) + diamine(s) (b) + éventuellement réactif (c) et la quantité de chlore ou de brome qui peut être apportée par l'additif (f) exprimée par le pourcentage en poids du mélange global bis-imide(s) (a) + diamine(s) (b) + additifs (e) et (f) + réactif facultatif (c) est au plus 8%.

A titre d'exemples spécifiques de guanamines (e) de formule (V), on peut citer en particulier :

- la diamino-2,4 méthyl-6 triazine-1,3,5,
- la diamino-2,4 éthyl-6 triazine-1,3,5,
- la diamino-2,4 butyl-6 triazine-1,3,5,
- la diamino-2,4 nonyl-6 triazine-1,3,5,
- la diamino-2,4 undécyl-6 triazine-1,3,5,
- la diamino-2,4 méthoxy-6 triazine-1,3,5,
- la diamino-2,4 butoxy-6 triazine-1,3,5,
- la diamino-2,4 phényl-6 triazine-1,3,5,
- la diamino-2,4 benzyl-6 triazine-1,3,5,
- la diamino-2,4 (méthyl-4)phényl-6 triazine-1,3,5.

Ces guanamines sont des produits connus dont certaines sont disponibles dans le commerce. On utilise de préférence, pour la mise en oeuvre de la présente invention, la diamino-2,4 méthyl-6 triazine-1,3,5, la diamino-2,4 nonyl-6 triazine-1,3,5, la diamino-2,4 phényl-6 triazine-1,3,5 et leurs mélanges.

La quantité de l'additif (e) représente généralement 2 % à 30 % et, de préférence, 4 % à 15 % du poids du mélange bis-imide(s) (a) + diamine(s) (b) + additif (f) + éventuellement réactif (c).

Par résine époxy chlorée ou bromée (f1), on entend définir une résine époxy qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes comme le bis-

(hydroxy-4 phényl)-2,2 propane, le bis(hydroxy-4 phényl) méthane, le bis (hydroxy-4 phényl) méthyl-phényl-méthane, les bis(hydroxy-4 phényl)tolyl-méthanes ; le résorcinol ; l'hydroquinone ; le pyrocatéchol ; le dihydroxy-4,4' diphényle ; et les produits de condensation des phénols précités avec un aldéhyde.

L'expression "poids d'équivalent époxy", qui apparaît ci-avant, peut être définie comme étant le poids de résine (en gramme) renfermant une fonction époxy

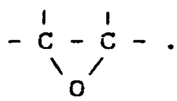

On choisit de préférence une résine époxy chlorée ou bromée possédant un poids d'équivalent époxy compris entre 250 et 500. On utilise tout préférentiellement dans la présente invention une résine époxy (f1) consistant dans une résine appartenant à la famille des éthers glycidiques des bis(hydroxyphényl)-alcanes, bromés sur les noyaux aromatiques, dont on a parlé ci-avant à propos de la définition détaillée de la résine (f1).

S'agissant du composé (f2) de formule (VI), on choisit de préférence un N,N'-alkyléne-bis-tétrabromophtalimide. On utilise tout préférentiellement dans la présente invention le N,N'-éthylène-bistétrabromophtalimide.

S'agissant du composé (f3) de formule (VII), on choisit de préférence un bis(allyloxydibromophényl)-alcane de formule :

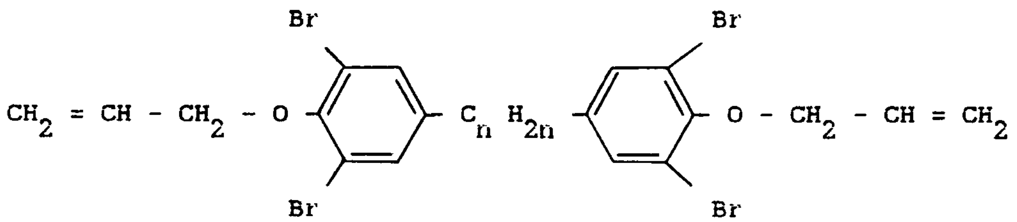 (VIII)

dans laquelle n est un nombre entier égal à 1, 2 ou 3. On utilise tout préférentiellement dans la présente invention le bis(allyloxy-4 dibromo-3,5 phényl)-2,2 propane.

Par résine époxy non halogénée (f4), on entend définir une résine époxy qui possède un poids d'équivalent époxy compris entre 100 et 1000 et qui consiste dans un éther glycidique obtenu en faisant réagir avec de l'épichlorhydrine un polyphénol non chloré ou non bromé sur le (ou les) noyau(x) aromatique(s) choisi dans le groupe des phénols dont on a parlé ci-avant à propos de la définition de la résine (f1).

On choisit de préférence une résine époxy non halogénée possédant un poids d'équivalent époxy compris entre 150 et 300. On utilise tout préférentiellement une résine époxy (f4) consistant dans une résine appartenant à la famille des éthers glycidiques des bis(hydroxyphényl)alcanes,non halogénés sur les noyaux aromatiques, dont on a parlé ci-avant à propos de la définition détaillée de la résine (f1).

La quantité de l'additif (f) représente de préférence, 3 % à 15 % du poids du mélange bis-imide(s) (a) + diamine(s) (b) + éventuellement réactif (c).

On a constaté que la quantité de chlore ou de brome qui peut être apportée dans les polymères selon l'invention par l'additif (f) est de nature à influencer certaines propriétés des polymères durcis obtenus, notamment les propriétés en matière de stabilité thermique et celles en matière d'adhérence des polymères sur des métaux tels que par exemple le cuivre. La quantité de chlore ou de brome apportée par l'additif (f), exprimée par le pourcentage en poids de chlore élémentaire ou de brome élémentaire par rapport au poids du mélange global bis-imide(s) (a) + diamine(s) (b) + réactif facultatif (c) + additifs (e) et (f), se situe de préférence dans l'intervalle allant de 1 à 6 %. On peut ajuster aisément la quantité de chore ou de brome à la valeur souhaitée en mettant en oeuvre par exemple des résines époxy (f1) ayant une teneur en chlore ou en brome plus ou moins importante ou en partant de mélanges de résines époxy chlorées ou bromées (f1) avec des résines époxy non halogénées (f4) ou encore en partant de mélanges de composés (f2) et/ou (f3) avec des résines époxy non halogénées (f4).

A titre d'exemples spécifiques de bis-imides (a) de formule (I) on peut citer en particulier les composés indiqués dans la demande française FR-A-2.608.613, c'est-à-dire :

- le N,N'-métaphénylène-bis-maléimide,

- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phényléne-1,3-bis-maléimide,
- le N,N'-méthyl-4 phénylène-1,3-bis-maléimide,
- le N,N'-méthyl-5 phénylène-1,3-bis-maléimide.

Ces bis-maléimides peuvent être preparés selon les procédés décrits dans le brevet américain US-A-3.018.290 et le brevet anglais GB-A-1.137.290. On utilise de préference, pour la mise en oeuvre de la présente invention, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

A titre d'exemples spécifiques de diamines encombrées (b) de formules (IV) et (III), on peut citer en particulier :

- le diamino-4,4' tétraméthyl-3,3',5,5' diphénylméthane,
- le diamino-4,4' tétraéthyl-3,3',5,5' diphénylméthane,
- le diamino-4,4' diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le bis (amino-4 diméthyl-3,5 $\alpha,\alpha$-diméthylbenzyl)-1,4 benzène,
- le bis (amino-4 diméthyl-3,5 $\alpha,\alpha$-diméthylbenzyl)-1,3 benzène,
- le diamino-1,3 diéthyl-2,4 méthyl-6 benzène,
- le diamino-1,3 méthyl-2 diéthyl-4,6 benzène.

Ces diamines encombrées peuvent être preparées selon les procédés décrits dans le brevet anglais GB-A-852.651 et le brevet américain US-A-3.481.900. On utilise de préference, pour la mise en oeuvre de la présente invention, le diamino-4,4' tétraméthyl-3,3'5,5' diphénylméthane, le diamino-4,4' tétraéthyl-3,3'5,5' diphénylméthane, le diamino-4,4' diéthyl-3,3' diméthyl-5,5' diphénylméthane et leurs mélanges.

Les quantités de N',N-bis-imide(s) (a) et de diamine(s) encombrée(s) (b) sont choisies de façon à ce que le rapport r :

$$\frac{\text{nombre de moles de bis-imide(s) (a)}}{\text{nombre de moles de diamine(s) (b)}}$$

se situe dans l'intervalle allant de 1,5/1 à 20/1 et, de préférence, allant de 2/1 à 5/1.

Il peut être avantageux dans certains cas de modifier les polymères selon la présente invention par emploi supplémentaire d'un réactif copolymérisable (c) et/ou d'un composé de type imidazole (d).

Comme réactif facultatif (c) qui convient bien, on peut citer en particulier les composés indiqués dans la demande française FR-A-2.608.613, à savoir :

(c1) soit un ou plusieurs monomères de formule :

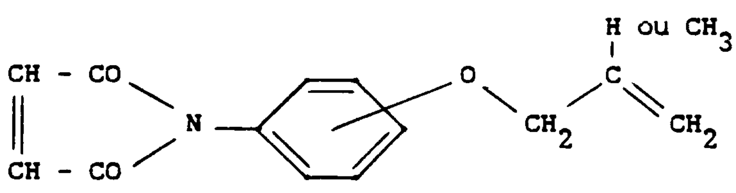

(IX)

dans laquelle le radical allyloxy ou méthallyloxy est en position ortho, métha ou par par rapport à l'atome de carbone du cycle benzénique relié à l'azote ;

(c2) soit un composé comprenant :

- un mélange d'un monomère de formule :

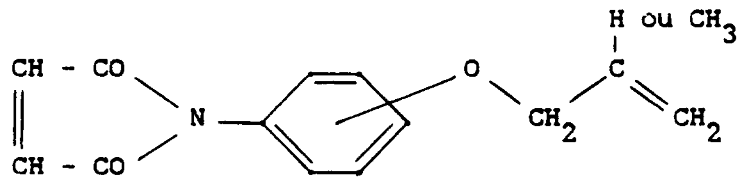

(IX)

dans laquelle le radical allyloxy ou méthallyloxy est en position ortho, méta ou para par rapport à l' atome de carbone du cycle benzénique relié à l'azote,

- avec :
  . au moins un dérivé monosubstitué de formule :

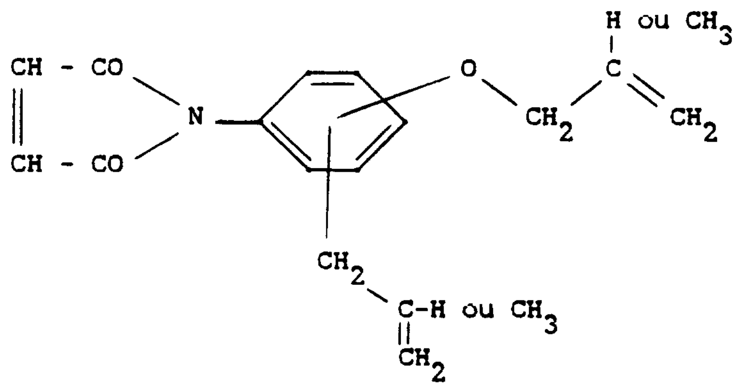

(X)

  . et éventuellement un ou plusieurs dérivé(s) disubstitué(s) de formule :

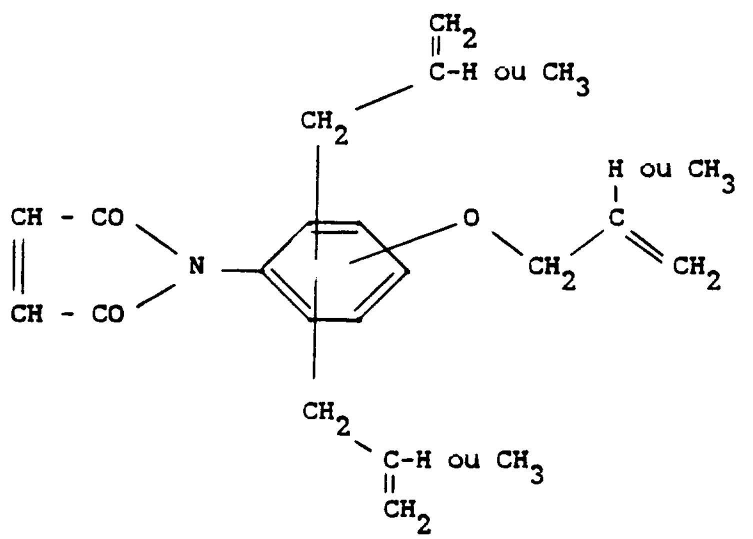

(XI)

Dans le composé précité servant de réactif (c2), les proportions des divers constituants du mélange des produits de formules (IX), (X) et éventuellement (XI) peuvent varier dans des larges limites. De manière générale, les proportions des constituants sont choisies entre les limites suivantes (exprimant le pourcentage pondéral de chacun des constituants dans le mélange) :

- au moins 30 %, et de préférence de 50 % à 80 % de N-(méth)allyloxyphénylmaléimide de formule (IX),
- de 5 % à 50 % et de préférence de 10 % à 35 % de dérivé(s) mono-(méth)allyl substitué(s) de formule (X),

- et de 0 % à 20 % et de préférence de 0 % à 15 % de dérivé(s) di-(méth)allyl substitué(s) de formule (XI),

la somme des constituants devant dans chaque cas être égale à 100 % en poids.

(c3) soit un ou plusieurs hétérocycle(s) substitué(s).

Il doit être entendu que l'on peut utiliser, comme réactif (c), des mélanges (c1 + c3) ou (c2 + c3).

S'agissant du réactif facultatif (c1), il est choisi parmi :

- le N-(allyloxy-2 phényl)maléimide,
- le N-(allyloxy-3 phényl)maléimide,
- le N-(allyloxy-4 phényl)maléimide,
- le N-(méthallyloxy-2 phényl)maléimide,
- le N-(méthallyloxy-3 phényl)maléimide,
- le N-(méthallyloxy-4 phényl)maléimide,
- et leurs mélanges.

Les maléimides de formule (IX) sont des produits connus qui sont décrits dans la demande de brevet européen EP-A-0.208.634.

S'agissant du réactif facultatif (c2), on utilise de préférence comme composé comprenant un mélange de N-(méth)allyloxyphénylmaléimide de formule (IX) avec un ou plusieurs dérivé(s) de substitution (méth)-allylé(s) de formule(s) (X) et éventuellement (XI), le produit brut obtenu par mise en oeuvre du procédé décrit dans la demande de brevet européen EP-A-0.274.967.

S'agissant du réactif facultatif (c3), il est choisi parmi : les vinylpyridines, la N-vinylpyrrolidone, l'isocyanurate d'allyle, le vinyltétrahydrofuranne, et leurs mélanges.

S'agissant de la quantité du réactif facultatif (c), elle représente généralement moins de 60 % et, de préférence, de 2 % à 25 % du poids total des réactifs (a) et (b).

Le composé imidazole (d) facultatif répond à la formule générale indiquée dans la demande française FR-A-2.608.613 ; c'est-à-dire :

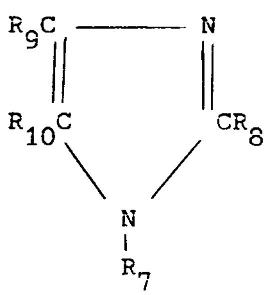

(XII)

dans laquelle $R_7$, $R_8$, $R_9$ et $R_{10}$, identiques ou différents, représentent chacun : un atome d'hydrogène, un radical alkyle ou alcoxy ayant de 1 à 20 atomes de carbone, vinyle, phényle, nitro, $R_9$ pouvant former avec $R_{10}$ et les atomes de carbone auxquels sont liés ces radicaux un cycle unique comme par exemple un cycle benzénique, $R_7$ pouvant également représenter un groupement carbonyle lié a un deuxième cycle imidazole.

Comme exemples spécifiques de composés imidazole (d), on peut citer en particulier : l'imidazole ou glyoxaline, le méthyl-1 imidazole, le méthyl-2 imidazole, le diméthyl-1,2 imidazole, le vinyl-1 imidazole, le vinyl-1 méthyl-2 imidazole, le benzimidazole, le carbonyldiimidazole.

Le composé imidazole facultatif (d) est utilisé en quantités catalytiques. Selon la nature du composé imidazole et selon la vitesse de polymérisation souhaitée au stade de la mise en oeuvre, on utilise le composé imidazole à un taux se situant dans l'intervalle allant généralement de 0,005 à 1 % en poids par rapport a l'ensemble des réactifs (a) + (b) + éventuellement (c) et, de préférence, allant de 0,01 a 0,5 %.

Il doit être bien entendu que les propositions des constituants du milieu de préparation des polymères conformes à la présente invention, qui sont généralement utilisées, sont choisies dans les intervalles mentionnés ci-avant dans le présent mémoire de manière à ce que, en définitive, le nombre total de doubles liaisons carbone-carbone [apportées par (a) + éventuellement (c) + éventuellement (f3)] et le cas échéant de groupes époxy [apportés par (f1) ou (f4)] soit supérieur au nombre total de groupes amino [apportés par (b) + (e)].

Divers adjuvants peuvent être incorporés à divers moments dans les polymères selon l'invention. Ces adjuvants, habituellement utilisés et bien connu de l'homme de l'art, peuvent être par exemple des stabilisants ou des inhibiteurs de dégradation, des lubrifiants ou des agents de démoulage, des colorants ou

des pigments, des charges pulvérulentes ou en particules comme des silicates, des carbonates, le kaolin, la craie, le quartz pulvérisé, le mica ou des microbilles de verre. On peut aussi incorporer des adjuvants modifiant la structure physique du produit obtenu comme par exemple des agents porogènes ou des agents de renforcement fibreux tels que notamment des fibrilles de carbone, de polyimide, de polyamides aromatiques, des whiskers.

Les polymères selon l'invention peuvent être préparés par chauffage direct du ou des bis-imide(s) (a), du réactif aminé (b) et des additifs (e) et (f), en présence éventuellement du réactif (c) et/ou du composé imidazole (d), au moins jusqu'à l'obtention d'un mélange liquide homogène. La température peut varier en fonction de l'état physique des composés en présence mais elle se situe généralement entre 50 °C et 300 °C. Il est avantageux d'amener et de maintenir les composés de départ dans un état de mélange intime avant et pendant le chauffage à l'aide par exemple d'une bonne agitation. Quand on utilise le réactif (c) et/ou le composé imidazole (d), il(s) est(sont) de préférence ajouté(s) dans le mélange réactionnel bien agité après avoir réalisé la fusion du mélange (a) + (b) + (e) + (f). Lorsque le composé (d) est particulièrement actif, pour éviter son encapsulation dans le réseau polymère engendré, il est souhaitable de l'ajouter dans un solvant ou diluant compatible avec le milieu réactionnel ; on a trouvé qu'il pouvait être intéressant d'utiliser comme solvant ou diluant un des liquides organiques polaires dont on parle ci-après.

La préparation des polymères selon l'invention peut aussi être effectuée par chauffage du mélange des réactifs en présence de quantités variables d'un diluant organique qui est liquide dans une partie au moins de l'intervalle 50 °C-250 °C. Parmi ces diluants, on peut mentionner en particulier des hydrocarbures aromatiques comme les xylènes et le toluène, des hydrocarbures halogénés comme les chlorobenzènes, des liquides organiques polaires comme le dioxanne, le tétrahydrofuranne, l'oxyde de dibutyle, le diméthylformamide, le diméthylsulfoxyde, la N-méthylpyrrolidone, le diméthylacétamide, la cyclohexanone, le méthylglycol et la méthyl-éthyl-cétone. Les solutions ou suspensions de polymères peuvent être utilisées telles quelles pour de nombreux emplois ; on peut également isoler les polymères, par exemple par filtration, éventuellement après précipitation au moyen d'un diluant organique miscible avec le solvant utilisé.

Il doit être compris que les propriétés des polymères selon l'invention peuvent varier dans une large mesure en fonction notamment de la nature exacte des réactifs engagés, des proportions de réactifs choisies et des conditions précises de température adoptées dans l'intervalle précédemment mentionné. En ce qui concerne les polymères obtenus, ceux-ci peuvent être des polymères durcis, insolubles dans les solvants usuels tels que par exemple les liquides organiques polaires cités dans le paragraphe précédent et ne présentant pas de ramollissement notable au-dessous de la température à laquelle ils commencent à se dégrader.

Mais ces polymères peuvent également se présenter sous l'aspect de prépolymères (P) solubles dans les solvants organiques polaires tels que par exemple ceux cités ci-avant et présentant un point de ramollissement à une température inférieure à 200 °C [en général ce point de ramollissement est compris entre 50 ° et 150 °C]. Ces prépolymères peuvent être obtenus en masse en chauffant le mélange des réactifs jusqu'à l'obtention d'un produit homogène ou pâteux à une température généralement située entre 50 ° et 180 °C pendant une durée qui peut aller de quelques minutes à quelques heures, cette durée étant d'autant plus brève que la température adoptée est plus élevée. Avant de soumettre le mélange des réactifs au chauffage, il est avantageux là aussi d'en effectuer par agitation un mélange intime préalable. Il existe là aussi une méthode préférée de mise en oeuvre du réactif (c) et/ou du composé imidazole (d) facultatif et il s'agit de celle indiquée ci-avant à propos de la préparation directe de polymères durcis. La préparation des prépolymères peut également être effectuée en présence de quantités variables d'un diluant qui est liquide dans une partie au moins de l'intervalle 50 °-180 °C. Dans ce contexte on peut avantageusement utiliser comme diluant les liquides organiques polaires dont on a parlé ci-avant.

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes. Sous la forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 300 °C, généralement comprises entre 150 ° et 300 °C ; une mise en forme complémentaire peut être effectuée pendant le durcissement, éventuellement sous vide ou sous une pression super-atmosphérique, ces opérations pouvant également être consécutives.

Conformément à un mode de réalisation préféré de la présente invention, on opère en deux stades, le premier stade consistant à chauffer le mélange des réactifs entre 50° et 180°C pour former un prépolymère (P), le second stade consistant à durcir le prépolymère (P), après lui avoir donné la forme désirée, par chauffage jusqu'à des températures de l'ordre de 300°C, généralement comprises entre 150°C et 300°C.

Conformément à un autre mode de réalisation préféré de la présente invention, on opère en deux stades, mais en utilisant dans le premier stade un procédé de préparation en continu du prépolymère (P) consistant à introduire isolément dans un malaxeur à vis extrudeuse :

- d'une part le bis-imide (a) à l'état solide divisé, et
- d'autre part le groupe des réactifs constitué par le réactif aminé (b) et l'additif (e) à l'état solide, liquide ou fondu et l'additif (f) à l'état liquide, avec au besoin le réactif (c) à l'état liquide et/ou le composé imidazole (d) à l'état solide ou en solution, les différents réactifs de ce groupe pouvant eux-mêmes être introduits de leur côté ensemble ou séparément, en présence éventuellement d'un diluant qui est liquide dans une partie au moins de l'intervalle 50° - 180°C.

Par l' expression "malaxeur à vis extrudeuse", on entend désigner un appareil qui ne présente pas de zone morte lors de la progression de la matière. Des appareils de ce genre qui peuvent comporter une ou plusieurs vis sont décrits dans l'ouvrage de E.G. FISHER-Extrusion of Plastics (Interscience Publisher 1964) pages 104 à 108. Ces malaxeurs peuvent comporter deux vis sans fin s'engrenant intimement l'une dans l'autre et tournant dans le même sens ; un appareil de ce type équipé plus particulièrement pour la préparation de téréphtalates alcalins est décrit dans le brevet français FR-A-1.462.935. Une autre variété de malaxeurs utilisables est constituée par les appareils comportant une vis sans fin à filetage interrompu effectuant simultanément un mouvement de rotation et un mouvement oscillatoire dans la direction de l'axe, logée dans une enveloppe comportant des dents qui coopèrent avec les ailettes interrompues de la vis. Des appareils de ce type sont décrits dans les brevets français FR-A-1.184.392, 1.184.393, 1.307.106 et 1.369.283.

Les polymères selon l'invention intéressent les domaines de l'industrie qui requièrent des matériaux doués de bonnes propriétés mécaniques et électriques ainsi que d'une grande inertie chimique à des températures de 200° à 300°C. A titre d'exemples, ils conviennent pour la fabrication d'isolants en plaques ou tubulaires pour transformateurs électriques, de supports de circuits imprimés, etc... Les articles préimprégnés sont utilisables pour la réalisation des pièces ayant des formes et des fonctions variées dans de nombreuses industries comme par exemple dans les industries électriques et électroniques. Ces pièces, appelées statifiés, qui peuvent être des pièces de révolution sont obtenues par placage de plusieurs couches de préimprégnés sur une forme ou un support. On peut utiliser aussi les préimprégnés comme renforts ou comme moyen de réparation de pièces détériorées.

Les exemples suivants sont donnés à titre illustratif mais non limitatif.

EXEMPLE :

Dans un réacteur en verre muni d'un agitateur de type ancre, on introduit à température ambiante :

- 77,5 g (0,216 mole) de N,N'-4,4'-diphénylméthane-bis-maléimide, et
- 14,5 g (0,047 mole) de diamino-4,4' tétraéthyl-3,3',5,5' diphénylméthane,
- 8 g (0,043 mole) de diamino-2,4 phényl-6 triazine-1,3,5 (ou benzoguanamine), et
- 10 g d'une résine époxy bromée résultant de la condensation de bisphénol A tétrabromé et d'épichlorhydrine ; elle possède un taux de brome élementaire de l'ordre de 50 % en poids et un poids d'équivalent époxy de 450 ; elle est disponible dans le commerce sous la marque déposée QATREX de la Société DOW, type 6410 ; la quantité de brome apportée par la résine époxy, exprimée par le pourcentage en poids de brome élémentaire par rapport au poids de l'ensemble bis-imide + diamine + monomère copolymérisable (N-vinylpyrrolidone : cf. ci-après) + guanamine + résine époxy, est égale à 4,2 %. Cette résine est introduite dans le réacteur sous forme de solution dans 10 g de cyclohexanone.

On plonge le réacteur dans un bain d'huile préchauffé à 160°C et le mélange est agité jusqu'à fusion complète des ingrédients engagés et obtention d'une masse homoyène. La durée de cette étape est de 5 minutes. Le mélange fondu ainsi obtenu est refroidi jusqu'a 140°C et on introduit 10 g de N-vinylpyrrolidone-2, puis on laisse réagir l'ensemble sous agitation pendant 28 minutes.

On obtient ainsi un prépolymère présentant un point de ramollissement voisin de 80 °C. On appelle point de ramollissement, la température approximative à laquelle une baguette de verre de 6 mm de diamètre peut s'enfoncer facilement de quelques millimètres dans le prépolymère. Ce prépolymère est soluble dans des solvants comme par exemple la N-méthylpyrrolidone, le diméthylformamide et la cyclohexanone.

Avec un premier lot de prépolymère préparé comme indiqué ci-avant, on confectionne des préimprégnés et des stratifiés cuivrés à 10 plis (10 couches de préimprégnés). Dans cette optique, on utilise une solution de prépolymère à 50 % en poids dans la N-méthylpyrrolidone pour enduire un tissu de verre fabriqué par la Société PORCHER sous la référence 7628 dont le grammage est de 200 g/$m^2$ et ayant subi un traitement par du gamma-aminopropyltriéthoxysilane (silane A 1100 d'UNION CARBIDE). Le tissu imprégné contient 40 g de prépolymère pour 60 g de tissu ; on le sèche en atmosphère ventilée à 160 °C pendant 5 minutes. On découpe ensuite 10 carrés (15 x 15 cm) que l'on empile avec une feuille de cuivre de 35 µm d'épaisseur placée sur l'une des faces extérieures de l'empilement et on place l'ensemble entre les plateaux d'une presse dans les conditions suivantes :

- pression : $40.10^5$ Pa,
- chauffage des plateaux de la presse : 2 heures à 190 °C.

On ne réalise pas de post-cuisson et on examine directement l'adhérence du cuivre sur le stratifié à 10 plis préparé : cette adhérence, mesurée au dynamomètre par traction du cuivre à 90° d'angle (selon la norme MIL P 55 617 B avec une vitesse de traction de 55 mm/min), est de l'ordre de 19,0 N/cm. Dans les mêmes conditions, le stratifié cuivre à 10 plis confectionné à partir d'un prépolymère préparé comme indiqué ci-avant mais en absence de benzoguanamine, conduit à une adhérence de l'ordre de 16,0 N/cm ; cette valeur peut être remontée à environ 19 N/cm mais à condition de soumettre le stratifié à 10 plis préparé à une post-cuisson à 200 °C pendant 16 heures.

Avec un second lot de prépolymère, on prépare des préimprégnés à 45 % en poids de prépolymère et des stratifiés comportant 5 plis dans les conditions décrites ci-avant (à noter qu'aucune feuille de cuivre n'est utilisée ici) sans réaliser de post-cuisson. On effectue des mesures de combustibilité à l'aide du test UL 94 vertical (épaisseur des éprouvettes à base de stratifié : 0,8 mm ; le taux de résine dans le stratifié est d'environ 40 % en poids ; le temps de combustion est donné en seconde après conditionnement de 48 heures, à 23 °C et sous 50 % d'humidité relative ; le classement est établi sur la moyenne de 10 résultats : 5 éprouvettes et 2 tests sur chaque éprouvette) :

- temps de combustion : 3 s ;
- classement : VO

Sur un troisième lot de prépolymère, on prépare des préimprégnés à 40 % en poids de prépolymère et des stratifiés comportant 22 plis dans les conditions décrites ci-avant (aucune feuille de cuivre n'est utilisée ici aussi) sans réaliser là non plus de post-cuisson. On effectue des mesures de coefficient d'expansion thermique selon l'axe Z des stratifiés (épaisseur des éprouvettes à base de stratifié : 3 mm). Ces mesures sont réalisées par Analyse Thermomécanique (TMA), à l'aide d'un appareil DU PONT modèle 982, avec une vitesse de montée en température de 10 K/min sous atmosphère d'azote. La valeur trouvée pour ce coefficient est de l'ordre de $42.10^{-6}$ $m.m^{-1}.K^{-1}$. Dans les mêmes conditions, le stratifié à 22 plis confectionné à partir d'un prépolymère préparé en absence de benzoguanamine présente un coefficient d'expansion thermique selon l'axe Z de l'ordre de $60.10^{-6}$ $m.m^{-1}.K^{-1}$ ; cette valeur peut être abaissée à environ $40.10^{-6}$ $m.m^{-1}.K^{-1}$ mais à condition de soumettre le stratifié témoin à 22 plis préparé à une post-cuisson à 200 °C pendant 16 heures.

Par ailleurs, la température de transition vitreuse du polymère durci, qui a été évaluée lors des mesures effectuées par Analyse Thermomécanique, est trouvée égale à 200 °C, alors qu'elle est de 150 °C en absence de benzoguanamine.

## Revendications

### Revendications pour les Etats contractants suivants : AT, BE, CH, DE, DK, FR, GB, GR, IT, LI, LU, NL, SE

**1.** Polymères à groupements imides caractérises en ce qu'ils comprennent le produit de réaction, à une température allant de 50 °C à 300 °C, entre :

- (a) un N,N'-bis-imide ou une association de plusieurs bis-imides de formule :

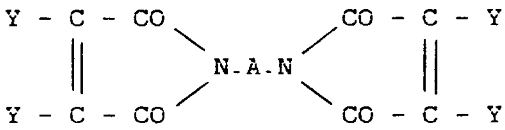

(I)

dans laquelle :

. les symboles Y, identiques ou différents, représentent chacun H, $CH_3$ ou Cl ;

. le symbole A représente un radical divalent choisi dans le groupe constitué par les radicaux : cyclohexylène ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

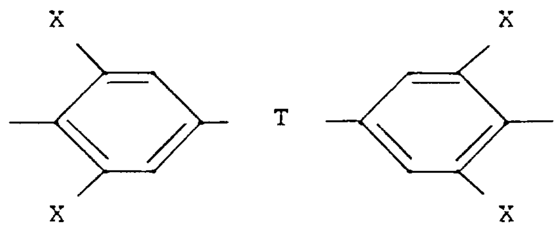

dans laquelle T représente un lien valentiel simple ou un groupement : $-CH_2-$ ;

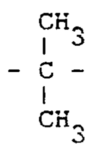 ;

- O - ;

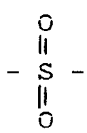 ; 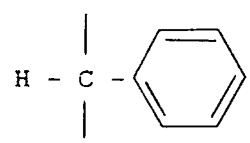 ; 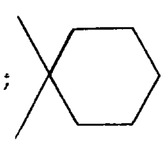 ;

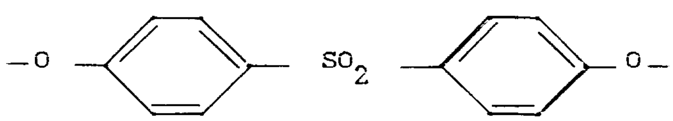

et les symboles X, identiques ou différents, représentent chacun un atome d'hydrogène, un radical méthyle, éthyle ou isopropyle ;

- (b) une ou plusieurs diamine(s) biprimaire(s) encombrée(s) ;
- (c) éventuellement un ou plusieurs monomère(s) non halogéné(s) autre(s) qu'un bis-imide de formule (I) et comprenant une ou plusieurs double(s) liaison(s) carbone-carbone polymérisable(s) ;
- et (d) éventuellement un composé de type imidazole ; lesdits polymères à groupements imides étant caractérisés par les points suivants :
  - point 1 : le milieu de réaction qui sert à les préparer contient en tant que réactif aminé (b) une ou plusieurs diamine(s) biprimaire(s) encombrée(s) prise(s) dans le groupe formé par :

(i) les espèces répondant a la formule générale :

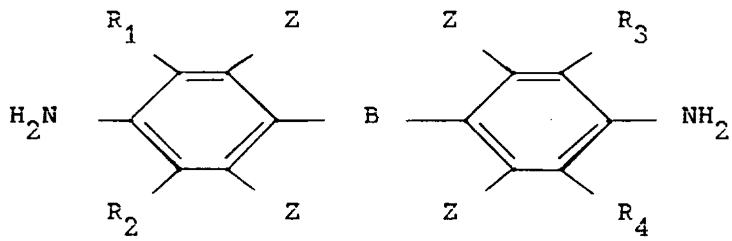

(IV)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydogène ou un atome de chlore ;

. le symbole B représente un radical divalent choisi dans le groupe formé par les radicaux : $- CH_2 -$ ;

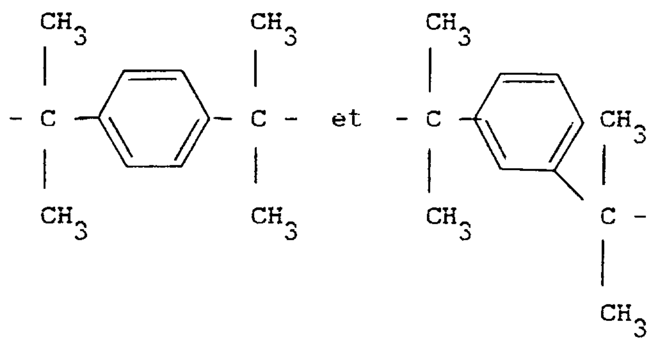

(2i) et les espèces répondant à la formule générale :

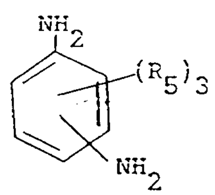

(III)

dans laquelle :

. les radicaux amino sont en position méta ou para, l'un par rapport à l'autre ;

. les symboles $R_5$, identiques ou différents, représentent chacun un radical méthyle, éthyle, propyle ou isopropyle ;

- point 2 : le milieu de réaction contient en outre deux additifs obligatoires (e) et (f) :

. (e) consistant dans une ou plusieurs guanamine(s) substituée(s) de formule :

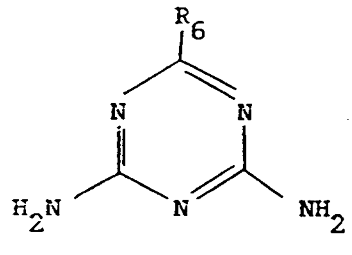

(V)

dans laquelle le symbole $R_6$ représente : un radical alkyle, linéaire ou ramifié, comportant de 1 à 12 atomes de carbone ; un radical alkoxy comportant de 1 à 12 atomes de carbone ; un radical phényle éventuellement substitué par 1 à 3 radicaux alkyle ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyle ayant de 1 à 3 atomes de carbone ;

. (f) consistant dans un composé choisi dans le groupe formé par:

* (f1) une résine époxy chlorée ou bromée, qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau (x) aromatique (s) issu d'un polyphénol choisi dans le groupe formé par: les bis-(hydroxyphényl)alcanes, le résorcinol, l'hydroquinone, le pyrocatéchol, le dihydroxy-4,4'diphényle et les produits de condensation de ces phénols avec un aldéyde;
* (f2) un N,N'-alcylène-bis-tétrahalogénophtalimide de formule:

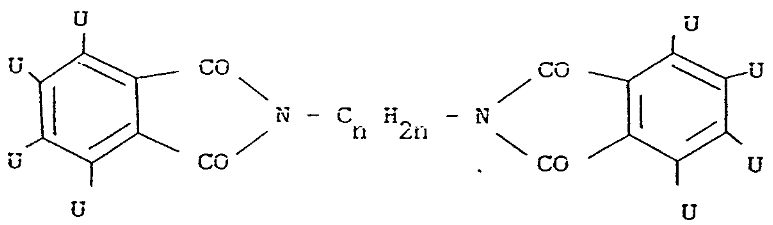

(VI)

dans laquelle :

. les symboles U, identiques ou différents, représentent chacun un atome de chlore ou de brome ;

. le radical alkylène $-C_n H_{2n}-$ peut être linéaire ou ramifié ;

. n est un nombre entier égal à 1, 2, 3 ou 4 ;

* (f3) un produit halogéné de formule :

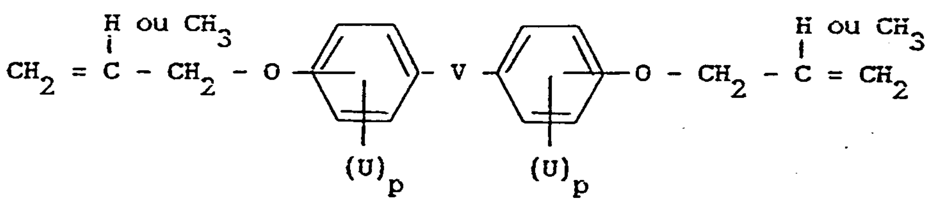

(VII)

dans laquelle :

. les symboles U ont la signification donnée ci-avant ;

. le symbole V représente un lien valentiel simple, un radical alkylène $-C_n H_{2n}-$, linéaire ou ramifié, avec n étant égal à 1, 2, 3 ou 4 ou un atome d'oxygène ;

. p est un nombre entier égal à 2, 3 ou 4 ;

* (f4) une résine époxy non halogénée, qui possède un poids d'équivalent époxy compris entre 100 et 1000 et qui consiste dans un éther glycidique obtenu en faisant réagir avec de l'épichlorhydrine un polyphénol non chloré ou bromé sur le (ou les) noyau (x)

aromatique (s) issu d'un polyphénol choisi dans le groupe des phénols dont on a parlé ci-avant à propos de la definition de la résine (f1);
et (f5) un mélange de deux ou de plus de deux des composés (f1) à (f4) précité entre eux,
à l'exception de toutes les combinaisons, qui se composent seulement de (f2) ou/et (f3);
les quantités de N',N-bis-imide(s) (a) et de diamine(s) encombrées (b) étant choisies de façon à ce que le raport r:

$$\frac{\text{nombre de moles de bis-imide(s) (a)}}{\text{nombre de moles de diamine(s) (b)}}$$

se situe dans l'intervalle allant de 1,5/1 à 20/1;
la quantité de l'additif (e) représentant 2% à 30% du poids du mélange bis-imide(s) (a) + diamine(s) (b) + additif (f) + eventuellement réactif (c), la quantité de l'additif (f) représentant 2% à 30% du poids du mélange bis-imide(s) (a) + diamine(s) (b) + eventuellement réactif (c) et la quantité de chlore ou de brome qui peut être apportée par l'additif (f) exprimée par le pourcentage en poids du mélange global bis-imide(s) (a) + diamine(s) (b) + additifs (e) et (f) + réactif facultatif (c) est au plus 8%.

**2.** Polymères selon la revendication 1, caractérisés en ce que le réactif (a) est pris date le groupe formé par :
- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide,
- leurs mélanges.

**3.** Polymères selon l'une quelconque des revendications 1 et 2, caractérisés en ce que le réactif (b) est pris dans le groupe formé par :
- le diamino-4,4' tétraméthyl-3,3',5,5' diphénylméthane,
- le diamino-4,4' tétraéthyl-3,3',5,5' diphénylméthane,
- le diamino-4,4' diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le bis (amino-4 diméthyl-3,5 $\alpha,\alpha$-diméthylbenzyl)-1,4 benzène,
- le bis (amino-4 diméthyl-3,5 $\alpha,\alpha$-diméthylbenzyl)-1,3 benzène,
- le diamino-1,3 diéthyl-2,4 méthyl-6 benzène,
- le diamino-1,3 méthyl-2 diéthyl-4,6 benzène,
- et leurs mélanges.

**4.** Polymères selon l'une quelconque des revendications 1 à 3, caractérisés en ce que l'additif (e) est pris dans le groupe formé par :
- la diamino-2,4 méthyl-6 triazine-1,3,5,
- la diamino-2,4 éthyl-6 triazine-1,3,5,
- la diamino-2,4 butyl-6 triazine-1,3,5,
- la diamino-2,4 nonyl-6 triazine-1,3,5,
- la diamino-2,4 undécyl-6 triazine-1,3,5,
- la diamino-2,4 méthoxy-6 triazine-1,3,5,

- la diamino-2,4 butoxy-6 triazine-1,3,5,
- la diamino-2,4 phényl-6 triazine-1,3,5,
- la diamino-2,4 benzyl-6 triazine-1,3,5,
- la diamino-2,4 (méthyl-4)phényl-6 triazine-1,3,5,
- et leurs mélanges.

**5.** Polymères selon l'une quelconque des revendications 1 à 4, caractérisés en ce que l'additif (f) consiste dans un composé choisi dans le groupe formé par :

* (f1) : une résine époxy chlorée ou bromée qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes comme le bis(hydroxy-4 phényl)-2,2 propane, le bis(hydroxy-4 phényl) méthane le bis(hydroxy-4 phényl) méthyl-phényl-méthane les bis(hydroxy-4 phényl)tolyl-méthanes ; le résorcinol ; l'hydroquinone ; le pyrocatéchol ; le dihydroxy-4,4'diphényle ; et les produits de condensation des phénols précités avec un aldéhyde ;
* (f2) : un N,N'-alkylène-bis-tétrabromophtalimide ;
* (f3) : un bis(allyloxydibromophényl)alcane de formule :

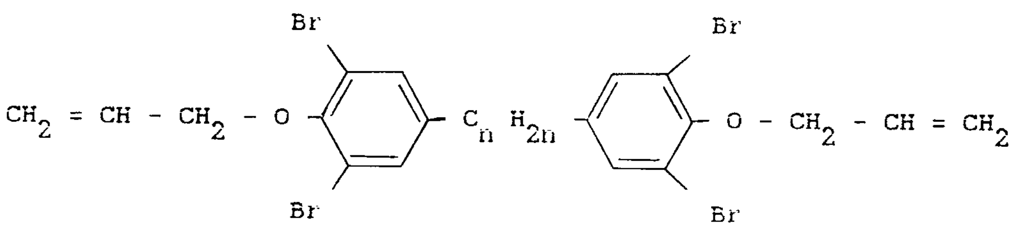

(VIII)

dans laquelle n est un nombre entier égal à 1, 2 ou 3 ;

* (f4) : une résine époxy non halogénée qui possède un poids d'équivalent époxy compris entre 100 et 1000 et qui consiste dans un éther glycidique obtenu en faisant réagir avec de l'épichlorhydrine un polyphénol non chloré ou non bromé sur le (ou les) noyau(x) aromatique(s) choisi dans le groupe des phénols dont on a parlé ci-avant dans la présente revendication à propos de la définition de la résine (f1) ;
* et (f5) un mélange de deux ou de plus de deux des composés (f1) à (f4) mentionnés ci-avant dans la présente revendication,

à l'exception de toutes les combinaisons, qui se composent seulement de (f2) ou/et (f3).

**6.** Polymères selon l'une quelconque des revendications 1 à 5, caractérisés en ce que le réactif facultatif (c), quand il est utilisé, est employé en quantités représentant moins de 60 % du poids total des réactifs (a) + (b).

**7.** Polymères selon l'une quelconque des revendications 1 à 6, caractérisés en ce que le composé imidazole facultatif (d), quand il est utilisé, est employé en quantités se situant dans l'intervalle allant de 0,005 à 1 % en poids par rapport à l'ensemble des réactifs (a) + (b) + éventuellement (c).

**8.** Polymères selon l'une quelconque des revendications 1 à 7, caractérisés en ce qu'ils se trouvent sous forme de polymères durcis, insolubles dans les solvants organiques polaires usuels et ne présentant pas de ramollissement notable au-dessous de la température à laquelle ils commencent à se dégrader.

**9.** Polymères selon l'une quelconque des revendications 1 à 8, caractérisés en ce qu'ils se trouvent sous forme de prépolymères thermodurcissables (P) solubles dans les solvants organiques polaires usuels et présentent un point de ramollissement à une température inférieure d 200 °C.

**Revendications pour l'Etat contractant suivant : ES**

**1.** Procédé de préparation de polymères à groupements imides se trouvant sous forme de polymères durcis, insolubles dans les solvants organiques polaires usuels et ne présentant pas de ramollissement

notable au-dessous de la température à laquelle ils commencent à se dégrader, qui consiste à chauffer directement à une température comprise entre 50 ° C et 300 ° C le mélange des ingrédients suivants :

- (a) un N,N'-bis-imide ou une association de plusieurs bis-imides de formule :

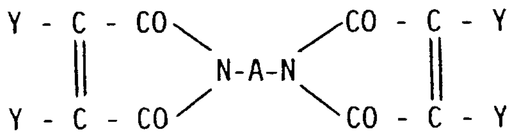

(I)

dans laquelle :

. les symboles Y, identiques ou différents, représentent chacun H, $CH_3$ ou Cl ;

. le symbole A représente un radical divalent choisi dans le groupe constitué par les radicaux : cyclohexylène ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

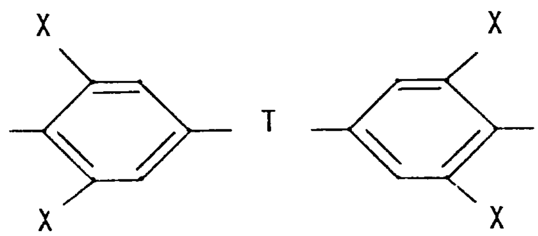

dans laquelle T représente un lien valentiel simple ou un groupement : $-CH_2-$ ;

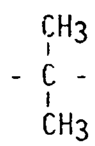

;

- O - ;

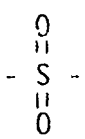

;

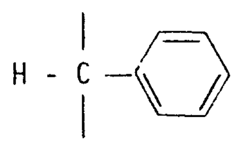

;

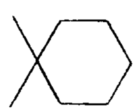

;

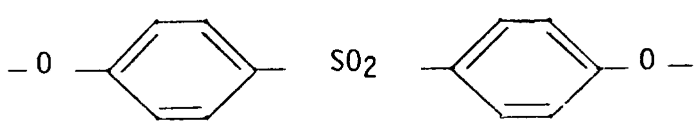

et les symboles X, identiques ou différents, représentent chacun un atome d'hydrogène, un radical méthyle, éthyle ou isopropyle ;

- (b) une ou plusieurs diamine(s) biprimaire(s) encombrée(s) ;
- (c) éventuellement un ou plusieurs monomère(s) non halogéné(s) autre(s) qu'un bis-imide de formule (I) et comprenant une ou plusieurs double(s) liaison(s) carbone-carbone polymérisable(s) ;
- et (d) éventuellement un composé de type imidazole ; ledit procédé étant caractérisé par les points suivants :
  - point 1 : le milieu de réaction contient en tant que réactif aminé (b) une ou plusieurs diamine(s) biprimaire(s) encombrée(s) prise(s) dans le groupe formé par :

(i) les espèces répondant à la formule générale :

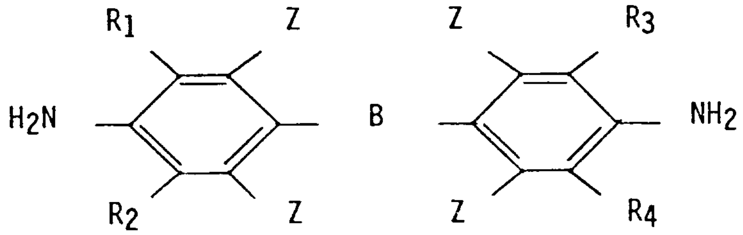

(IV)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydogène ou un atome de chlore ;

. le symbole B représente un radical divalent choisi dans le groupe formé par les radicaux : $-CH_2-$ ;

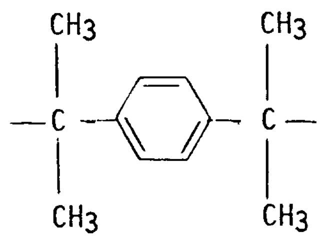

et

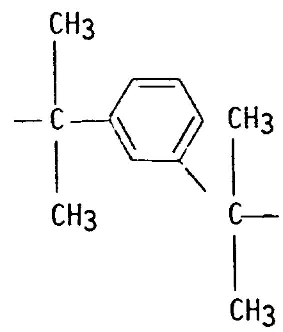

(2i) et les espèces répondant à la formule générale :

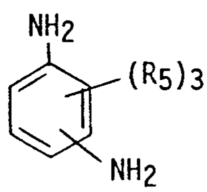

(III)

dans laquelle :

. les radicaux amino sont en position méta ou para, l'un par rapport à l'autre ;

. les symboles $R_5$, identiques ou différents, représentent chacun un radical méthyle, éthyle, propyle ou isopropyle ;

- point 2 : le milieu de réaction contient en outre deux additifs obligatoires (e) et (f) :

. (e) consistant dans une ou plusieurs guanamine(s) substituée(s) de formule :

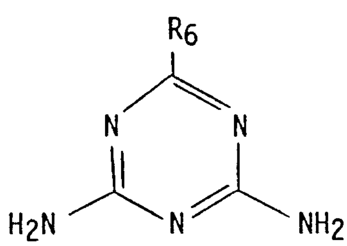

(V)

dans laquelle le symbole $R_6$ représente : un radical alkyle, linéaire ou ramifié, comportant

de 1 à 12 atomes de carbone, ; un radical alkoxy comportant de 1 à 12 atomes de carbone ; un radical phényle éventuellement substitué par 1 à 3 radicaux alkyle ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyle ayant de 1 à 3 atomes de carbone ;

. (f) consistant dans un composé choisi dans le groupe formé par:

* (f1) une résine époxy chlorée ou bromée, qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau (x) aromatique (s) issu d'un polyphénol choisi dans le groupe formé par: les bis-(hydroxyphényl)alcanes, le résorcinol, l'hydroquinone, le pyrocatéchol, le dihydroxy-4,4' diphényle et les produits de condensation de ces phénols avec un aldéyde;

* (f2) un N,N'-aleylène-bis-tétrahalogénophtalimide de formule:

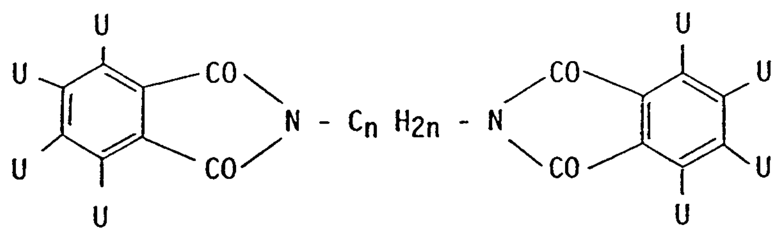
(VI)

dans laquelle :

. les symboles U, identiques ou différents, représentent chacun un atome de chlore ou de brome ;

. le radical alkylène $-C_n H_{2n}-$ peut être linéaire ou ramifié ;

. n est un nombre entier égal à 1, 2, 3 ou 4 ;

* (f3) un produit halogéné de formule :

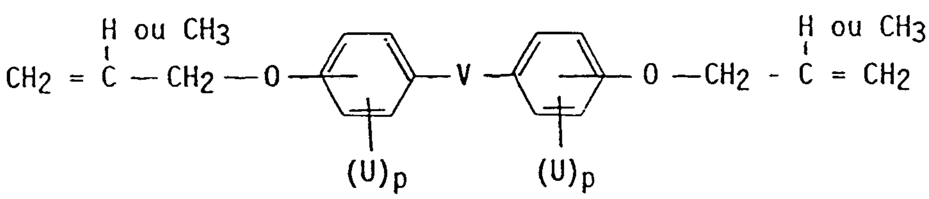
(VII)

dans laquelle :

. les symboles U ont la signification donnée ci-avant ;

. le symbole V représente un lien valentiel simple, un radical alkylène $-C_n H_{2n}-$, linéaire ou ramifié, avec n étant égal à 1, 2, 3 ou 4 ou un atome d'oxygène ;

. p est un nombre entier égal à 2, 3 ou 4 ;

* (f4) une résine époxy non halogénée, qui possède un poids d'équivalent époxy compris entre 100 et 1000 et qui consiste dans un éther glycidique obtenue en faisant réagir avec de l'épichlorhydrine un polyphénol non chloré ou bromé sur le (ou les) noyau (x) aromatique (s) issu d'un polyphénol choisi dans le groupe des phénols dont on a parlé ci-avant à propos de la definition de la résine (f1);

et (f5) un mélange de deux ou de plus de deux des composés (f1) à (f4) précité entre eux,

à l'exception de toutes les combinaisons, qui se composent seulement de (f2) ou/et (f3); les quantités de N',N-bis-imide(s) (a) et de diamine(s) encombrées (b) étant choisies de façon a ce que le raport r:

$$\frac{\text{nombre de moles de bis-imide(s) (a)}}{\text{nombre de moles de diamine(s) (b)}}$$

se situe dans l'intervalle allant de 1,5/1 a 20/1;
la quantité de l'additif (e) représentant 2% à 30% du poids du mélange bis-imide(s) (a) + diamine(s) (b) + additif (f) + eventuellement réactif (c), la quantité de l'additif (f) représentant 2% à 30% du poids du mélange bis-imide(s) (a) + diamine(s) (b) + eventuellement réactif (c) et la quantité de chlore ou de brome qui peut être apportée par l'additif (f) exprimée par le pourcentage en poids du mélange global bis-imide (s) (a) + diamine (s) (b) + additifs (e) et (f) + réactif facultatif (c) est au plus 8%.

**2.** Procédé selon la revendication 1, caractérisé en ce que le réactif (a) est pris dans le groupe formé par
- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide,
- leurs mélanges.

**3.** Procédé selon l'une quelconque des revendications 1 et 2, caractérisé en ce que le réactif (b) est pris dans le groupe formé par :
- le diamino-4,4' tétraméthyl-3,3',5,5' diphénylméthane,
- le diamino-4,4' tétraéthyl-3,3',5,5' diphénylméthane,
- le diamino-4,4' diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le bis (amino-4 diméthyl-3,5 $\alpha,\alpha$-diméthylbenzyl)-1,4 benzène,
- le bis (amino-4 diméthyl-3,5 $\alpha,\alpha$-diméthylbenzyl)-1,3 benzène,
- le diamino-1,3 diéthyl-2,4 méthyl-6 benzène,
- le diamino-1,3 méthyl-2 diéthyl-4,6 benzène,
- et leurs mélanges.

**4.** Procédé selon l'une quelconque des revendications 1 à 3, caractérisé en ce que l'additif (e) est pris dans le groupe formé par :
- la diamino-2,4 méthyl-6 triazine-1,3,5,
- la diamino-2,4 éthyl-6 triazine-1,3,5,
- la diamino-2,4 butyl-6 triazine-1,3,5,
- la diamino-2,4 nonyl-6 triazine-1,3,5,
- la diamino-2,4 undécyl-6 triazine-1,3,5,
- la diamino-2,4 méthoxy-6 triazine-1,3,5,
- la diamino-2,4 butoxy-6 triazine-1,3,5,
- la diamino-2,4 phényl-6 triazine-1,3,5,
- la diamino-2,4 benzyl-6 triazine-1,3,5,
- la diamino-2,4 (méthyl-4)phényl-6 triazine-1,3,5,
- et leurs mélanges.

**5.** Procédé selon l'une quelconque des revendications 1 à 4, caractérisé en ce que l'additif (f) consiste dans un composé choisi dans le groupe formé par :
* (f1) : une résine époxy chlorée ou bromée qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes comme le bis(hydroxy-4 phényl)-2,2 propane, le bis(hydroxy-4 phényl) méthane, le bis(hydroxy-4 phényl)

méthyl-phényl-méthane, les bis(hydroxy-4 phényl)tolyl-méthanes ; le résorcinol ; l'hydroquinone ; le pyrocatéchol ; le dihydroxy-4,4'diphényle ; et les produits de condensation des phénols précités avec un aldéhyde ;

* (f2) : un N,N'-alkylène-bis-tétrabromophtalimide ;
* (f3) : un bis(allyloxydibromophényl)alcane de formule :

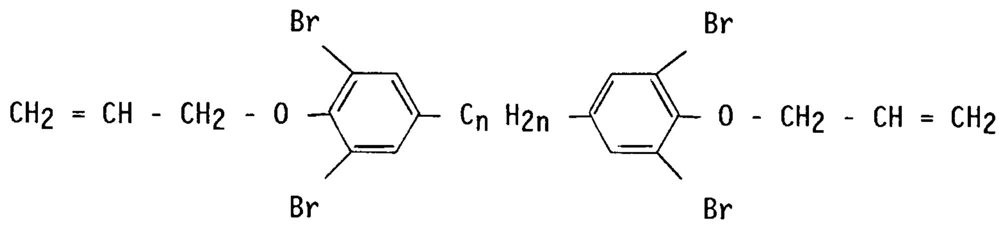

(VIII)

dans laquelle n est un nombre entier égal à 1, 2 ou 3 ;

* (f4) : une résine époxy non halogénée qui possède un poids d'équivalent époxy compris entre 100 et 1000 et qui consiste dans un éther glycidique obtenu en faisant réagir avec de l'épichlorhydrine un polyphénol non chloré ou non bromé sur le (ou les) noyau(x) aromatique(s) choisi dans le groupe des phénols dont on a parlé ci-avant dans la présente revendication à propos de la définition de la résine (f1) ;
* et (f5) un mélange de deux ou de plus de deux des composés (f1) à (f4) mentionnés ci-avant dans la présente revendication à l'exception de toutes les combinaisons, qui se composent seulement de (f2) ou/et (f3).

**6.** Procédé de préparation de polymères à groupements imides se trouvant sous forme de prépolymères thermodurcissables (P) solubles dans les solvants organiques polaires usuels et présentant un point de ramollissement à une température inférieure à 200 °C, qui consiste à chauffer directement le mélange des ingrédients (a) + (b) + éventuellement (c) + éventuellement (d) définis ci-avant dans l'une quelconque des revendications 1 à 3 à une température comprise entre 50 °C et 180 °C jusqu'à l'obtention d'un produit homogène ou pâteux,
ledit procédé étant caractérisé par les points suivants :

- point 1 : le milieu de réaction contient en tant que réactif aminé (b) une ou plusieurs amine(s) biprimaire(s) encombrée(s) prise(s) dans le groupe formé par les espèces (i) et (2i) définies ci-avant dans la revendication 1,
- point 2 : le milieu de réaction contient en outre deux additifs obligatoires (e) et (f) répondant aux définitions données ci-avant dans l'une quelconque des revendications 1, 4 et 5.

**7.** Procédé selon la revendication 1, caractérisé en ce qu'il consiste à chauffer le mélange des ingrédients de départ entre 50 °C et 180 °C pour former dans un premier temps un prépolymère (P), puis à provoquer le durcissement du prépolymère (P) par chauffage à une température comprise entre 150 °C et 300 °C.

**8.** Procédé selon l'une quelconque des revendications 1 à 7, caractérisé en ce que le réactif facultatif (c), quand il est utilisé, est employé en quantités représentant moins de 60 % du poids total des réactifs (a) + (b).

**9.** Procédé selon l'une quelconque des revendications 1 à 8, caractérisé en ce que le composé imidazole facultatif (d), quand il est utilisé, est employé en quantités se situant dans l'intervalle allant de 0,005 à 1 % en poids par rapport à l'ensemble des réactifs (a) + (b) + éventuellement (c).

**Claims**
**Claims for the following Contracting States : AT, BE, CH, DE, DK, FR, GB, GR, IT, LI, LU, NL, SE**

**1.** Polymers containing imide groups, characterized in that they comprise the product of reaction, at a temperature ranging from 50 °C to 300 °C, between:

- (a) an N,N'-bisimide, or a combination of two or more bisimides, of formula:

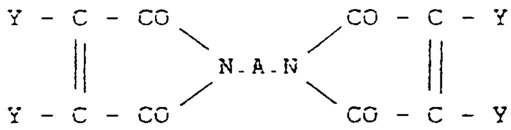

(I)

in which:

- the symbols Y, which are identical or different, are each H, $CH_3$, or Cl;
- the symbol A is a divalent radical chosen from the group consisting of the radicals: cyclohexylene; phenylenes; 4-methyl-1,3-phenylene; 2-methyl-1,3-phenylene; 5-methyl-1,3-phenylene; 2,5-diethyl-3-methyl-1,4-phenylene; and the radicals of formula:

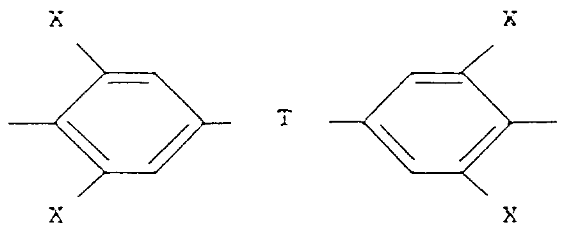

in which T is a single valency bond or a group: $-CH_2-$ ;

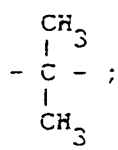

- O - ;

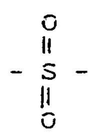 ; 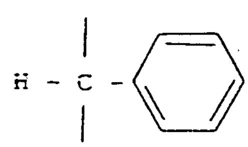 ; 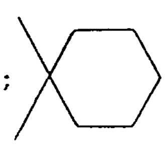 ;

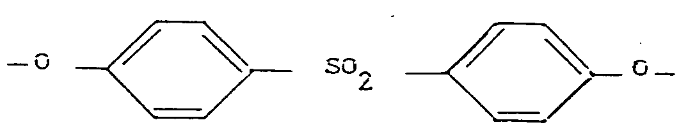

and the symbols X, which are identical or different, are each a hydrogen atom or a methyl, ethyl or isopropyl radical;

- (b) one or more hindered diprimary diamines;
- (c) if desired, one or more non-halogenated monomers other than a bisimide of formula (I) and comprising one or more polymerizable carbon-carbon double bonds;
- and (d) if desired, a compound of imidazole type; the said polymers containing imide groups being characterized by the following points:
- point 1: the reaction medium used for their preparation contains, as amine reactant (b), one or more hindered diprimary diamines taken from the group consisting of:

(i) the species corresponding to the general formula:

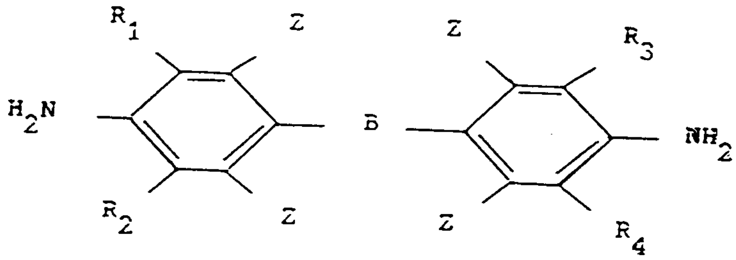

(IV)

in which:

- the symbols $R_1$, $R_2$, $R_3$ and $R_4$, which are identical or different, are each a methyl, ethyl, propyl or isopropyl radical;
- the symbols Z, which are identical or different, are each a hydrogen atom or a chlorine atom;
- the symbol B is a divalent radical chosen from the group formed by the radicals: $-CH_2-$;

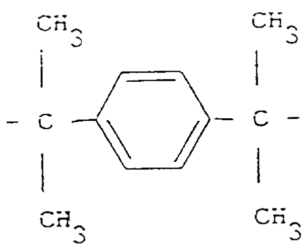

and

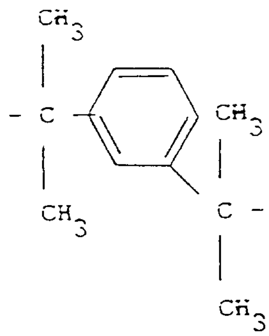

(2i) and the species corresponding to the general formula:

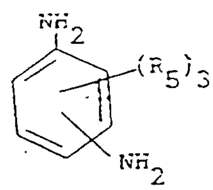

(III)

in which:

- the amino radicals are in the meta or para position in relation to one another;
- the symbols $R_5$, which are identical or different, are each a methyl, ethyl, propyl or isopropyl radical;

- point 2: the reaction medium additionally contains two obligatory additives (e) and (f):
  - (e) consisting of one or more substituted guanamines of formula:

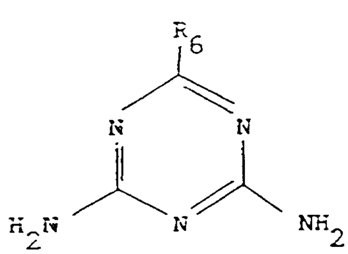

(V)

in which the symbol $R_6$ represents: a linear or branched alkyl radical containing from 1 to 12 carbon atoms; an alkoxy radical containing from 1 to 12 carbon atoms; a phenyl radical which is optionally substituted with 1 to 3 alkyl radicals having from 1 to 3 carbon atoms; a phenylalkyl radical containing from 1 to 3 carbon atoms in the alkyl radical, the benzene ring of which may optionally be substituted with 1 to 3 alkyl radicals having from 1 to 3 carbon atoms;

- (f) consisting of a compound chosen from the group formed by:
  - (f1) a chlorinated or brominated epoxy resin which has an epoxide equivalent weight of between 200 and 2000 and consists of a glycidyl ether obtained by reacting epichlorohydrin with a derivative, chlorinated or brominated on the aromatic ring(s), obtained from a polyphenol chosen from the group formed by: bis(hydroxyphenyl)alkanes, resorcinol, hydroquinone, pyrocatechol, 4,4'-dihydroxydiphenyl and the condensation products of these phenols with an aldehyde;
  - (f2) an N,N'-alkylene-bis-tetrahalophthalimide of formula:

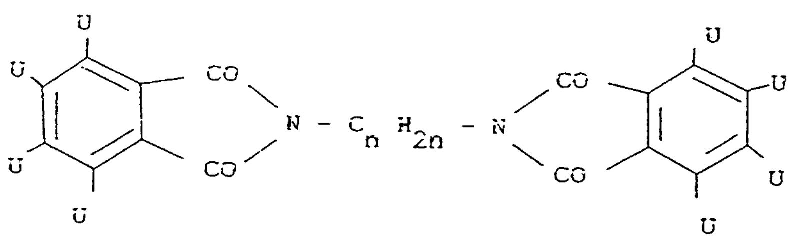

(VI)

in which:

- the symbols U which are identical or different, are each a chlorine or bromine atom;
- the alkylene radical $-C_n H_{2n}-$ may be linear or branched;
- n is an integer 1, 2, 3 or 4;
  - (f3) a halogenated product of formula:

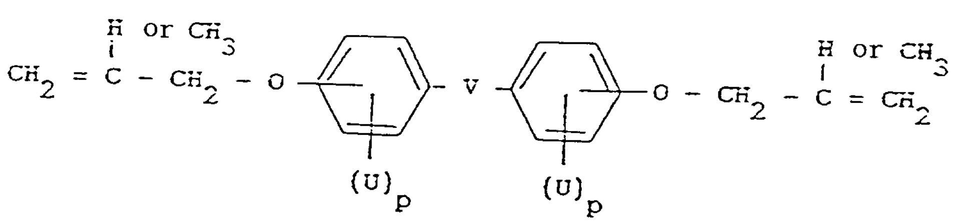

(VII)

in which:

- the symbols U are as defined above;
- the symbol V represents a single valency bond, a linear or branched alkylene radical $-C_n H_{2n}-$ where n is equal to 1, 2, 3 or 4, or an oxygen atom;
- p is an integer 2, 3 or 4;
  - (f4) a non-halogenated epoxy resin which has an epoxide equivalent weight of between 100 and 1000 and consists of a glycidyl ether obtained by reacting epichlorohydrin with a polyphenol, not chlorinated or brominated on the aromatic ring(s), obtained from a polyphenol chosen from the group of phenols mentioned above with regard to the definition of the resin (f1);

  and (f5) a mixture of two or more of compounds (f1) to (f4) as mentioned above, with the exception of all combinations composed solely of (f2) and/or (f3);

  the quantities of N',N-bisimide(s) (a) and of hindered diamine(s) (b) being chosen such that the ratio r:

$$\frac{\text{number of moles of bisimide(s) (a)}}{\text{number of moles of diamine(s) (b)}}$$

is within the range from 1.5/1 to 20/1;
the quantity of additive (e) representing from 2% to 30% by weight of the mixture of bisimide(s) (a) + diamine(s) (b) + additive (f) + if desired, reactant (c), the quantity of additive (f) representing from 2% to 30% by weight of the mixture of bisimide(s) (a) + diamine(s) (b) + if desired, reactant (c), and the maximum quantity of chlorine or bromine which may be introduced by additive (f), expressed as a percentage by weight of the overall mixture of bisimide(s) (a) + diamine(s) (b) + additives (e) and (f) + optional reactant (c) being 8%.

**2.** Polymers according to claim 1, characterized in that the reactant (a) is taken from the group formed by:
- N,N'-metaphenylene-bis-maleimide,
- N,N'-paraphenylene-bis-maleimide,
- N,N'-4,4'-diphenylmethane-bis-maleimide,
- N,N'-4,4'-diphenyl ether-bis-maleimide,
- N,N'-4,4'-diphenyl sulfone-bis-maleimide,
- N,N'-(1,4-cyclohexylene)-bis-maleimide,
- N,N'-4,4'-(1,1-diphenylcyclohexane)-bis-maleimide,
- N,N'-4,4'-(2,2-diphenylpropane)-bis-maleimide,
- N,N'-4,4'-triphenylmethane-bis-maleimide,
- N,N'-(2-methyl-1,3-phenylene)-bis-maleimide,
- N,N'-(4-methyl-1,3-phenylene)-bis-maleimide,
- N,N'-(5-methyl-1,3-phenylene)-bis-maleimide, and
- mixtures thereof.

**3.** Polymers according to either of claims 1 and 2, characterized in that reactant (b) is taken from the group formed by:
- 4,4'-diamino-3,3',5,5'-tetramethyldiphenylmethane,
- 4,4'-diamino-3,3',5,5'-tetraethyldiphenylmethane,
- 4,4'-diamino-3,5-dimethyl-3',5'-diethyldiphenylmethane,
- 4,4'-diamino-3,3'-diethyl-5,5'-dimethyldiphenylmethane,
- 4,4'-diamino-3,3',5,5'-tetraisopropyldiphenylmethane,
- 4,4'-diamino-3,3'-diisopropyl-5,5'-dimethyldiphenylmethane,
- 1,4-bis(4-amino-3,5-dimethyl-α,α-dimethylbenzyl)benzene,
- 1,3-bis(4-amino-3,5-dimethyl-α,α-dimethylbenzyl)benzene,
- 1,3-diamino-2,4-diethyl-6-methylbenzene,
- 1,3-diamino-2-methyl-4,6-diethylbenzene, and
- mixtures thereof.

**4.** Polymers according to any one of claims 1 to 3, characterized in that additive (e) is taken from the group formed by:
- 2,4-diamino-6-methyl-1,3,5-triazine,
- 2,4-diamino-6-ethyl-1,3,5-triazine,
- 2,4-diamino-6-butyl-1,3,5-triazine,
- 2,4-diamino-6-nonyl-1,3,5-triazine,
- 2,4-diamino-6-undecyl-1,3,5-triazine,
- 2,4-diamino-6-methoxy-1,3,5-triazine,
- 2,4-diamino-6-butoxy-1,3,5-triazine,
- 2,4-diamino-6-phenyl-1,3,5-triazine,
- 2,4-diamino-6-benzyl-1,3,5-triazine,
- 2,4-diamino-6-(4-methylphenyl)-1,3,5-triazine, and
- mixtures thereof.

**5.** Polymers according to any one of claims 1 to 4, characterized in that additive (f) consists of a compound chosen from the group formed by:
* (f1): a chlorinated or brominated epoxy resin which has an epoxide equivalent weight of between 200 and 2000 and which consists of a glycidyl ether obtained by reacting epichlorohydrin with a derivative, chlorinated or brominated on the aromatic ring(s), obtained from a polyphenol chosen from the group formed by: the family of bis(hydroxyphenyl)alkanes such as 2,2-bis(4-hydroxyphenyl)propane, bis(4-hydroxyphenyl)methane, bis(4-hydroxyphenyl)methylphenylmethane, bis-(4-hydroxyphenyl)tolylmethanes; resorcinol; hydroquinone; pyrocatechol; 4,4'-dihydroxybiphenyl; and the condensation products of the abovementioned phenols with an aldehyde;

* (f2): an N,N'-alkylene-bis-tetrabromophthalimide;
* (f3): a bis(allyloxydibromophenyl)alkane of formula:

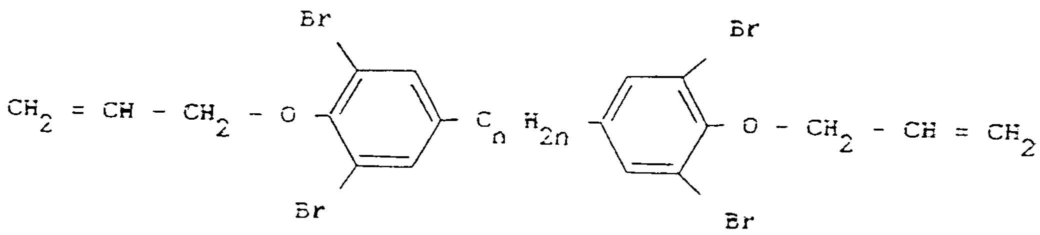

(VIII)

in which n is an integer 1, 2 or 3;

* (f4): a non-halogenated epoxy resin which has an epoxide equivalent weight of between 100 and 1000 and which consists of a glycidyl ether obtained by reacting epichlorohydrin with a polyphenol, not chlorinated or not brominated on the aromatic ring(s), chosen from the group of phenols which was mentioned earlier in this claim with regard to the definition of the resin (f1);
* and (f5) a mixture of two or more of compounds (f1) to (f4), as mentioned earlier in this claim, with the exception of all combinations which are composed solely of (f2) and/or (f3).

**6.** Polymers according to any one of claims 1 to 5, characterized in that the optional reactant (c), when it is used, is employed in quantities of at least 60% of the total weight of reactants (a) + (b).

**7.** Polymers according to any one of claims 1 to 6, characterized in that the optional imidazole compound (d), when it is used, is employed in quantities which are within the range from 0.005 to 1 % by weight relative to all of the reactants (a) + (b) + if desired (c).

**8.** Polymers according to any one of claims 1 to 7, characterized in that they are in the form of cured polymers which are insoluble in the usual polar organic solvents and which do not exhibit any notable softening below the temperature at which they begin to degrade.

**9.** Polymers according to any one of claims 1 to 8, characterized in that they are in the form of thermosetting prepolymers (P) which are soluble in the usual polar organic solvents and have a softening point at a temperature below 200 ° C.

**Claims for the following Contracting State : ES**

**1.** Process for the preparation of polymers containing imide groups which are in the form of cured polymers which are insoluble in the usual polar organic solvents and do not exhibit any notable softening below the temperature at which they begin to degrade, which consists in heating directly, at a temperature of between 50 ° C and 300 ° C, the mixture of the following ingredients:

- (a) an N,N'-bisimide, or a combination of two or more bisimides, of formula:

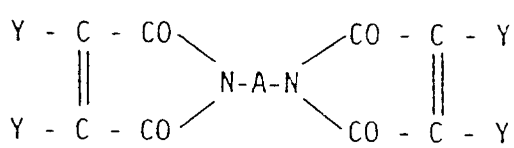

(I)

in which:

- the symbols Y, which are identical or different, are each H, $CH_3$, or Cl;
- the Symbol A is a divalent radical chosen from the group consisting of the radicals: cyclohexylene; phenylenes; 4-methyl-1,3-phenylene; 2-methyl-1,3-phenylene; 5-methyl-1,3-phenylene; 2,5-diethyl-3-methyl-1,4-phenylene; and the radicals of formula:

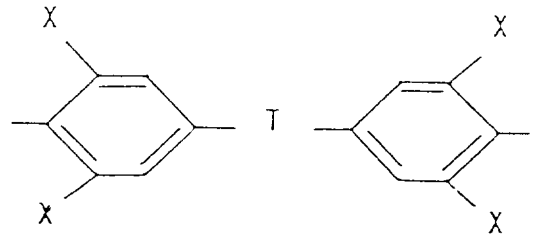

in which T is a single valency bond or a group: $-CH_2-$ ;

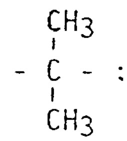

- O - ;

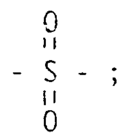 ; 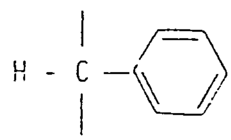 ; 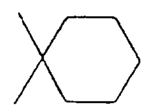 ;

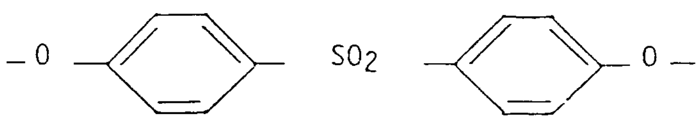

and the symbols X, which are identical or different, are each a hydrogen atom or a methyl, ethyl or isopropyl radical;

- (b) one or more hindered diprimary diamines;
- (c) if desired, one or more non-halogenated monomers other than a bisimide of formula (I) and comprising one or more polymerizable carbon-carbon double bonds;
- and (d) if desired, a compound of imidazole type;

the said process being characterized by the following points:

- point 1: the reaction medium contains, as amine reactant (b), one or more hindered diprimary diamines taken from the group consisting of:
  (i) the species corresponding to the general formula:

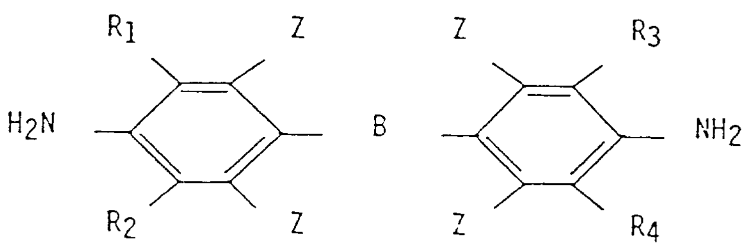 .

(IV)

in which:

- the symbols $R_1$, $R_2$, $R_3$ and $R_4$, which are identical or different, are each a methyl, ethyl, propyl or isopropyl radical;
- the symbols Z, which are identical or different, are each a hydrogen atom or a chlorine atom;

- the symbol B is a divalent radical chosen from the group formed by the radicals: $-CH_2-$;

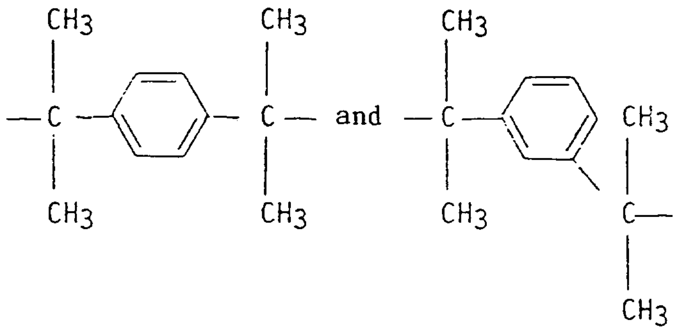

(2i) and the species corresponding to the general formula:

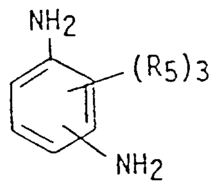

(III)

in which:
- the amino radicals are in the meta or para position in relation to one another;
- the symbols $R_5$, which are identical or different, are each a methyl, ethyl, propyl or isopropyl radical;

- point 2: the reaction medium additionally contains two obligatory additives (e) and (f):
- (e) consisting of one or more substituted guanamines of formula:

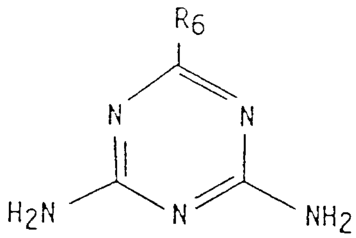

(V)

in which the symbol $R_6$ represents: a linear or branched alkyl radical containing from 1 to 12 carbon atoms; an alkoxy radical containing from 1 to 12 carbon atoms; a phenyl radical which is optionally substituted with 1 to 3 alkyl radicals having from 1 to 3 carbon atoms; a phenylalkyl radical containing from 1 to 3 carbon atoms in the alkyl radical, the benzene ring of which may optionally be substituted with 1 to 3 alkyl radicals having from 1 to 3 carbon atoms;
- (f) consisting of a compound chosen from the group formed by:
  - * (f1) a chlorinated or brominated epoxy resin which has an epoxide equivalent weight of between 200 and 2000 and consists of a glycidyl ether obtained by reacting epichlorohydrin with a derivative, chlorinated or brominated on the aromatic ring(s), obtained from a polyphenol chosen from the group formed by: bis(hydroxyphenyl)alkanes, resorcinol, hydroquinone, pyrocatechol, 4,4'-dihydroxydiphenyl and the condensation products of these phenols with an aldehyde;

* (f2) an N,N'-alkylene-bis-tetrahalophthalimide of formula:

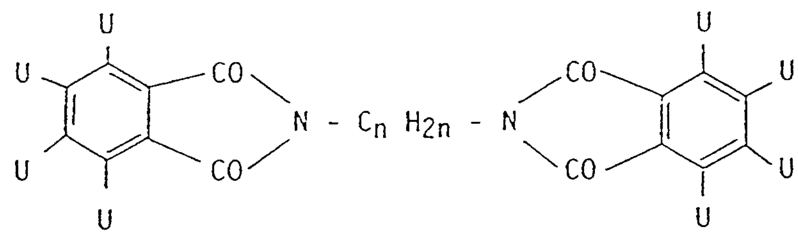

(VI)

in which:

- the symbols U which are identical or different, are each a chlorine or bromine atom;
- the alkylene radical $-C_n H_{2n}-$ may be linear or branched;
- n is an integer 1, 2, 3 or 4;

* (f3) a halogenated product of formula:

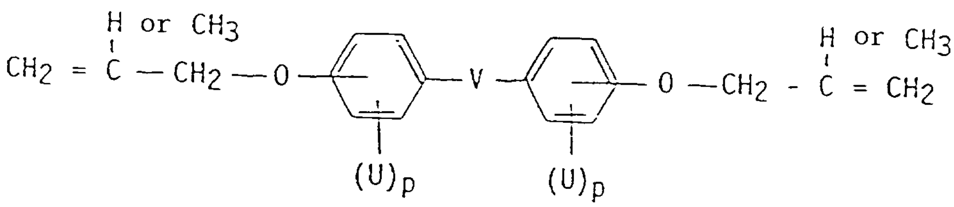

(VII)

in which:

- the symbols U are as defined above;
- the symbol V represents a single valency bond, a linear or branched alkylene radical $-C_n H_{2n}-$ where n is equal to 1, 2, 3 or 4, or an oxygen atom;
- p is an integer 2, 3 or 4;

* (f4) a non-halogenated epoxy resin which has an epoxide equivalent weight of between 100 and 1000 and consists of a glycidyl ether obtained by reacting epichlorohydrin with a polyphenol, not chlorinated or brominated on the aromatic ring(s), obtained from a polyphenol chosen from the group of phenols mentioned above with regard to the definition of the resin (f1);

and (f5) a mixture of two or more of compounds (f1) to (f4) as mentioned above,
with the exception of all combinations composed solely of (f2) and/or (f3);
the quantities of N',N-bisimide(s) (a) and of hindered diamine(s) (b) being chosen such that the ratio r:

$$\frac{\text{number of moles of bisimide(s) (a)}}{\text{number of moles of diamine(s) (b)}}$$

is within the range from 1.5/1 to 20/1;
the quantity of additive (e) representing from 2% to 30% by weight of the mixture of bisimide(s) (a) + diamine(s) (b) + additive (f) + if desired, reactant (c), the quantity of additive (f) representing from 2% to 30% by weight of the mixture of bisimide(s) (a) + diamine(s) (b) + if desired, reactant (c), and the maximum quantity of chlorine or bromine which may be introduced by additive (f), expressed as a percentage by weight of the overall mixture of bisimide(s) (a) + diamine(s) (b) + additives (e) and (f) + optional reactant (c) being 8%.

**2.** Process according to claim 1, characterized in that reactant (a) is taken from the group formed by

- N,N'-metaphenylene-bis-maleimide,
- N,N'-paraphenylene-bis-maleimide,
- N,N'-4,4'-diphenylmethane-bis-maleimide,

- N,N'-4,4'-diphenyl ether-bis-maleimide,
- N,N'-4,4'-diphenyl sulfone-bis-maleimide,
- N,N'-(1,4-cyclohexylene)-bis-maleimide,
- N,N'-4,4'-(1,1-diphenylcyclohexane)-bis-maleimide,
- N,N'-4,4'-(2,2-diphenylpropane)-bis-maleimide,
- N,N'-4,4'-triphenylmethane-bis-maleimide,
- N,N'-(2-methyl-1,3-phenylene)-bis-maleimide,
- N,N'-(4-methyl-1,3-phenylene)-bis-maleimide,
- N,N'-(5-methyl-1,3-phenylene)-bis-maleimide, and
- mixtures thereof.

**3.** Process according to either of claims 1 and 2, characterized in that the reactant (b) is taken from the group formed by:
- 4,4'-diamino-3,3',5,5'-tetramethyldiphenylmethane,
- 4,4'-diamino-3,3',5,5'-tetraethyldiphenylmethane,
- 4,4'-diamino-3,5-dimethyl-3',5'-diethyldiphenylmethane,
- 4,4'-diamino-3,3'-diethyl-5,5'-dimethyldiphenylmethane,
- 4,4'-diamino-3,3',5,5'-tetraisopropyldiphenylmethane,
- 4,4'-diamino-3,3'-diisopropyl-5,5'-dimethyldiphenylmethane,
- 1,4-bis(4-amino-3,5-dimethyl-$\alpha$,$\alpha$-dimethylbenzyl)benzene,
- 1,3-bis(4-amino-3,5-dimethyl-$\alpha$,$\alpha$-dimethylbenzyl)benzene,
- 1,3-diamino-2,4-diethyl-6-methylbenzene,
- 1,3-diamino-2-methyl-4,6-diethylbenzene, and
- mixtures thereof.

**4.** Process according to any one of claims 1 to 3, characterized in that additive (e) is taken from the group formed by:
- 2,4-diamino-6-methyl-1,3,5-triazine,
- 2,4-diamino-6-ethyl-1,3,5-triazine,
- 2,4-diamino-6-butyl-1,3,5-triazine,
- 2,4-diamino-6-nonyl-1,3,5-triazine,
- 2,4-diamino-6-undecyl-1,3,5-triazine,
- 2,4-diamino-6-methoxy-1,3,5-triazine,
- 2,4-diamino-6-butoxy-1,3,5-triazine,
- 2,4-diamino-6-phenyl-1,3,5-triazine,
- 2,4-diamino-6-benzyl-1,3,5-triazine,
- 2,4-diamino-6-(4-methylphenyl)-1,3,5-triazine, and
- mixtures thereof.

**5.** Process according to any one of claims 1 to 4, characterized in that additive (f) consists of a compound chosen from the group formed by:
* (f1): a chlorinated or brominated epoxy resin which has an epoxide equivalent weight of between 200 and 2000 and which consists of a glycidyl ether obtained by reacting epichlorohydrin with a derivative, chlorinated or brominated on the aromatic ring(s), obtained from a polyphenol chosen from the group formed by: the family of bis(hydroxyphenyl)alkanes such as 2,2-bis(4-hydroxyphenyl)propane, bis(4-hydroxyphenyl)methane, bis(4-hydroxyphenyl)methylphenylmethane, bis-(4-hydroxyphenyl)tolylmethanes; resorcinol; hydroquinone; pyrocatechol; 4,4'-dihydroxybiphenyl; and the condensation products of the abovementioned phenols with an aldehyde;
* (f2): an N,N'-alkylene-his-tetrabromophthalimide;

* (f3): a bis(allyloxydibromophenyl)alkane of formula:

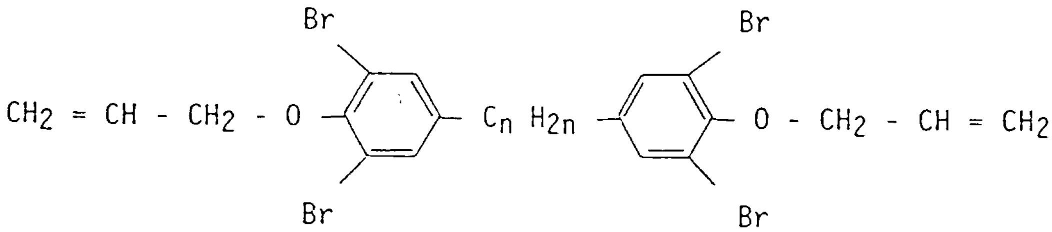

(VIII)

in which n is an integer 1, 2 or 3;
* (f4): a non-halogenated epoxy resin which has an epoxide equivalent weight of between 100 and 1000 and which consists of a glycidyl ether obtained by reacting epichlorohydrin with a polyphenol, not chlorinated or not brominated on the aromatic ring(s), chosen from the group of phenols which was mentioned earlier in this claim with regard to the definition of the resin (f1);
* and (f5) a mixture of two or more of compounds (f1) to (f4), as mentioned earlier in this claim, with the exception of all combinations which are composed solely of (f2) and/or (f3).

**6.** Process for the preparation of polymers containing imide groups which are in the form of thermosetting prepolymers (P) and are soluble in the usual polar organic solvents and have a softening point at a temperature below 200 °C, which consists in heating directly the mixture of ingredients (a) + (b) + if desired, (c) + if desired, (d) defined above in any one of claims 1 to 3, at a temperature of between 50 °C and 180 °C, until a homogenous or pasty product is obtained, the said process being characterized by the following points:
- point 1: the reaction medium contains, as amine reactant (b), one or more hindered diprimary amines taken from the group formed by the species (i) and (2i) as defined above in claim 1,
- point 2: the reaction medium additionally contains two obligatory additives (e) and (f) corresponding to the definitions given above in any one of claims 1, 4 and 5.

**7.** Process according to claim 1, characterized in that it consists in heating the mixture of starting ingredients at between 50 °C and 180 °C in order to form, in a first phase, a prepolymer, (P), then in carrying out curing of the prepolymer (P) by heating at a temperature of between 150 °C and 300 °C.

**8.** Process according to any one of claims 1 to 7, characterized in that the optional reactant (c), when it is used, is employed in quantities of at least 60% of the total weight of reactants (a) + (b).

**9.** Process according to any one of claims 1 to 8, characterized in that the optional imidazole compound (d), when it is used, is employed in quantities which are within the range from 0.005 to 1% by weight relative to all of the reactants (a) + (b) + if desired (c).

**Patentansprüche**

**Patentansprüche für folgende Vertragsstaaten : AT, BE, CH, DE, DK, FR, GB, GR, IT, LI, LU, NL, SE**

**1.** Polymere mit Imidgruppen, dadurch gekennzeichnet, daß sie das Produkt einer bei einer Temperatur von 50 bis 300 °C durchgeführten Reaktion umfassen zwischen

(a) einem N,N'-Bis-imid oder einer Assoziation von mehreren Bis-imiden der Formel

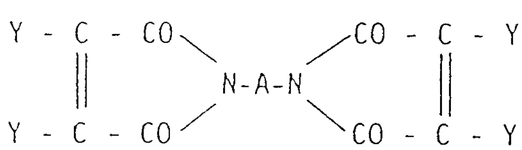

(I)

worin

die Symbole Y, identisch oder verschieden, jeweils H, $CH_3$ oder Cl bedeuten;

das Symbol A einen zweiwertigen Rest wiedergibt, ausgewählt aus der Gruppe der folgenden Reste: Cyclohexylen; Phenylene; 4-Methyl-1,3-phenylen; 2-Methyl-1,3-phenylen; 5-Methyl-1,3-phenylen; 2,5-Diethyl-3-methyl-1,4-phenylen; und den Resten der Formel

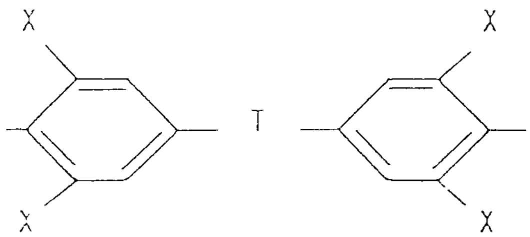

worin T für eine einfache Valenzbindung oder eine Gruppe $-CH_2-$ ;

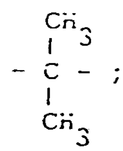

- O - ;

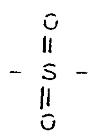 ; 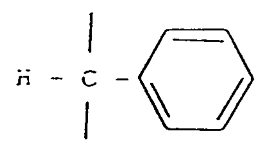 ; 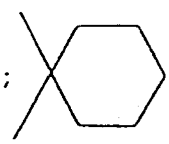 ;

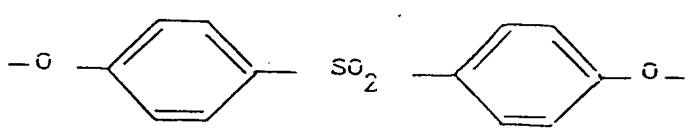

steht und die Symbole X, indentisch oder verschieden, jeweils ein Wasserstoffatom, einen Methyl-, Ethyl- oder Isopropylrest wiedergeben;

(b) einem oder mehreren sterisch gehinderten, biprimären Diaminen;

(c) gegebenenfalls einem oder mehreren nicht-halogenierten Monomeren, die von einem Bis-imid der Formel (I) verschieden sind und eine oder mehrere polymerisierbare Kohlenstoff-Kohlenstoff-Doppelbindungen umfassen; und

(d) gegebenenfalls einer Verbindung vom Imidazol-Typ;

wobei die Polymeren mit Imidgruppen dich die folgenden Merkmale gekennzeichnet sind:

Merkmal 1: das zu ihrer Herstellung dienende Reaktionsmilieu enthalt als Aminreagens (b) ein oder mehrere sterisch gehinderte, biprimäre Diamine aus der folgenden Gruppe:

(i) den Species der allgemeinen Formel

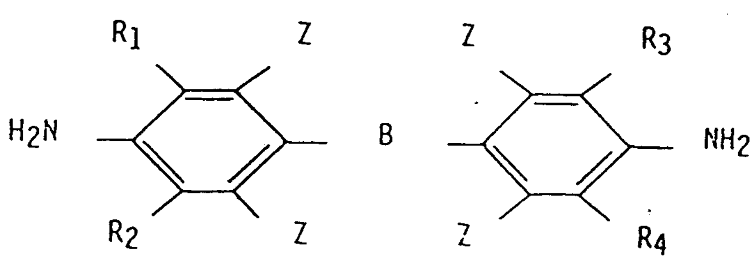 (IV)

worin

die Symbole $R_1$, $R_2$, $R_3$ und $R_4$, identisch oder verschieden, jeweils eine Methyl-, Ethyl-, Propyl- oder Isopropylgruppe bedeuten;

die Symbole Z, identisch oder verschieden, jeweils ein Wasserstoffatom oder ein Chloratom bedeuten;

das Symbol B einen zweiwertigen Rest, ausgewählt unter den folgenden Resten: $-CH_2-$;

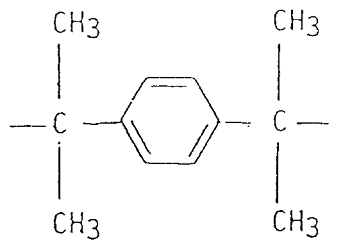
und
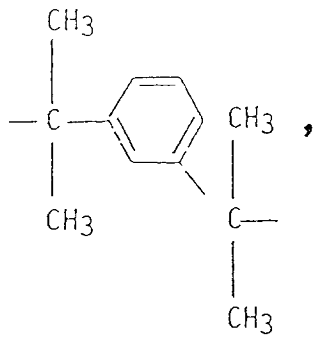
,

wiedergibt;

(2i) und den Species der allgemeinen Formel

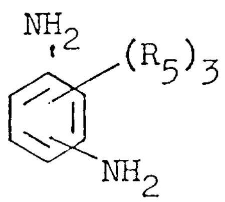
(III)

worin

die Aminoreste sich in meta- oder para-Stellung in bezug aufeinander befinden;

die Symbole $R_5$, identisch oder verschieden, jeweils einen Methyl-, Ethyl-, Propyl- oder Isopropylrest bedeuten;

Merkmal 2: das Reaktionsmilieu enthält außerdem zwei obligatorische Additive (e) und (f):

(e) bestehend aus einem oder mehreren substituierten Guanaminen der Formel

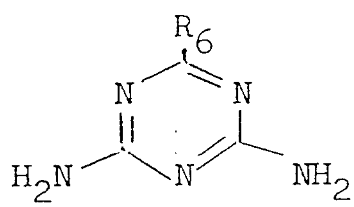
(V)

worin das Symbol $R_6$ bedeutet: einen linearen oder verzweigten Alkylrest mit 1 bis 12 Kohlenstoffatomen; einen Alkoxyrest mit 1 bis 12 Kohlenstoffatomen; einen gegebenenfalls durch 1 bis 3 Alkylreste mit 1 bis 3 Kohlenstoffatomen substituierten Phenylrest; einen Phenylalkylrest mit 1 bis 3 Kohlenstoffatomen im Alkylrest, dessen Benzolring gegebenenfalls durch 1 bis 3 Alkylreste mit 1 bis 3 Kohlenstoffatomen substituiert sein kann;

(f) bestehend aus einer Verbindung, ausgewählt unter den folgenden:

(f1) einem chlorierten oder bromierten Epoxyharz, das ein Epoxyäquivalentgewicht zwischen 200 und 2000 besitzt und das aus einem Glycidether besteht, erhalten, indem man mit Epichlorhydrin ein Derivat umsetzt, das an dem (oder den) aromatischen Kern(en) bromiert oder chloriert ist und einem Polyphenol, ausgewählt unter den folgenden, entstammt: den Bis-(hydroxyphenyl)-alkanen, dem Resorcin, dem Hydrochinon, dem Brenzcatechin, dem 4,4'-Dihydroxy-diphenyl und den Kondensationsprodukten dieser Phenole mit einem Aldehyd;

(f2) einem N,N'-Alkylen-bis-tetrahalogenphthalimid der Formel

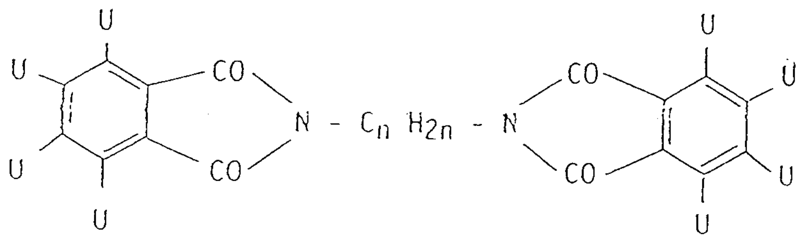

(VI)

worin

die Symbole U, identisch oder verschieden, jeweils ein Chlor- oder Bromatom bedeuten;

der Alkylenrest $-C_n H_{2n}-$ linear oder verzweigt sein kann;

n eine ganze Zahl entsprechend 1, 2, 3 oder 4 ist;

(f3) einem halogenierten Produkt der Formel

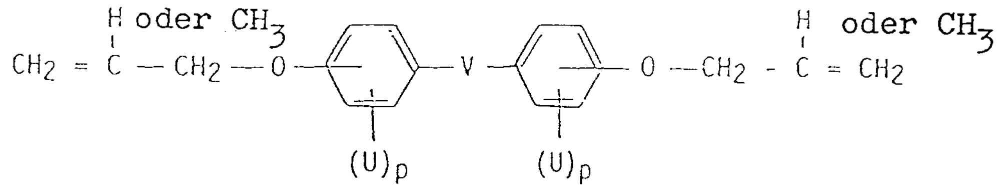

(VII)

worin

die Symbole U die vorstehend angegebene Bedeutung besitzen;

das Symbol V eine einfache Valenzbindung, einen linearen oder verzweigten Alkylenrest $-C_n H_{2n}-$,mit n entsprechend 1, 2, 3 oder 4, oder ein Sauerstoffatom bedeutet;

p für eine ganze Zahl entsprechend 2, 3 oder 4 steht;

(f4) einem nicht-halogenierten Epoxyharz, das ein Epoxyäquivalentgewicht zwischen 100 und 1000 besitzt und das aus einem Glycidether besteht, erhalten, indem man mit Epichlorhydrin ein Polyphenol umsetzt, das an dem oder den aromatischen Kern(en) nicht-chloriert oder -bromiert ist und einem Polyphenol entstammt, ausgewählt aus der Gruppe der vorstehend im Hinblick auf die Definition des Harzes (f1) angeführten Phenole; und

(f5) einem Gemisch von zwei oder mehr als zwei der angeführten Verbindungen (f1) bis (f4) miteinander,

ausgenommen all die Kombinationen, die lediglich aus (f2) oder/und (f3) bestehen;

wobei die Mengen an N,N'-Bis-imid(en) (a) und an sterisch gehindertem(n) Diamin(en) (b) derart ausgewählt sind, daß das Verhältnis r:

$$\frac{\text{Anzahl der Mole Bis-imid(e) (a)}}{\text{Anzahl der Mole Diamin(e) (b)}}$$

im Bereich von 1,5/1 bis 20/1 liegt; wobei die Menge des Additivs (e) 2% bis 30% des Gewichts des Gemisches Bis-imid(e) (a) + Diamin(e) (b) + Additiv (f) + gegebenenfalls Reagens (c) beträgt, die Menge des Additivs (f) 2 bis 30% des Gewichts des Gemisches Bis-imid(e) (a) + Diamin(e) (b) + gegebenenfalls Reagens (c) beträgt und die Menge des Chlors oder des Broms, die durch das Additiv (f) eingebracht sein kann, ausgedrückt durch den Gewichtsprozentanteil des Gesamtgemisches Bis-imid(e) (a) + Diamin(e) (b) + Additive (e) und (f) + fakultatives Reagens (c), höchstens 8% beträgt.

**2.** Polymere gemäß Anspruch 1, dadurch gekennzeichnet, daß das Reagens (a) aus der folgenden Gruppe ausgewählt wird:

N,N'-Metaphenylen-bis-maleimid,

N,N'-Paraphenylen-bis-maleimid,

N,N'-4,4'-Diphenylmethan-bis-maleimid,

N,N'-4,4'-Diphenylether-bis-maleimid,
N,N'-4,4'-Diphenylsulfon-bis-maleimid,
N,N'-1,4-Cyclohexylen-bis-maleimid,
N,N'-4,4'-(1,1-Diphenyl-cyclohexan)-bis-maleimid,
N,N'-4,4'-(2,2-Diphenyl-propan)-bis-maleimid,
N,N'-4,4'-Triphenylmethan-bis-maleimid,
N,N'-2-Methyl-1,3-phenylen-bis-maleimid,
N,N'-4-Methyl-1,3-phenylen-bis-maleimid,
N,N'-5-Methyl-1,3-phenylen-bis-maleimid
und ihren Mischungen.

**3.** Polymere gemäß einem der Ansprüche 1 und 2, dadurch gekennzeichnet, daß das Reagens (b) unter den folgenden ausgewählt wird:
4,4'-Diamino-3,3',5,5'-tetramethyl-diphenylmethan,
4,4'-Diamino-3,3',5,5'-tetraethyl-diphenylmethan,
4,4'-Diamino-3,5-dimethyl-3',5'-diethyl-diphenylmethan,
4,4'-Diamino-3,3'-diethyl-5,5'-dimethyl-diphenylmethan,
4,4'-Diamino-3,3',5,5'-tetraisopropyl-diphenylmethan,
4,4'-Diamino-3,3'-diisopropyl-5,5'-dimethyl-diphenylmethan,
Bis-1,4-(4-amino-3,5-dimethyl-$\alpha$,$\alpha$-dimethylbenzyl)-benzol,
Bis-1,3-(4-amino-3,5-dimethyl-$\alpha$,$\alpha$-dimethylbenzyl)-benzol,
1,3-Diamino-2,4-diethyl-6-methyl-benzol,
1,3-Diamino-2-methyl-4,6-diethyl-benzol
und ihren Mischungen.

**4.** Polymere gemäß einem der Ansprüche 1 bis 3, dadurch gekennzeichnet, daß das Additiv (e) unter den folgenden ausgewählt wird:
2,4-Diamino-6-methyl-1,3,5-triazin,
2,4-Diamino-6-ethyl-1,3,5-triazin,
2,4-Diamino-6-butyl-1,3,5-triazin,
2,4-Diamino-6-nonyl-1,3,5-triazin,
2,4-Diamino-6-undecyl-1,3,5-triazin,
2,4-Diamino-6-methoxy-1,3,5-triazin,
2,4-Diamino-6-butoxy-1,3,5-triazin,
2,4-Diamino-6-phenyl-1,3,5-triazin,
2,4-Diamino-6-benzyl-1,3,5-triazin,
2,4-Diamino-6-(4-methyl)-phenyl-1,3,5-triazin
und ihren Mischungen.

**5.** Polymere gemäß einem der Ansprüche 1 bis 4, dadurch gekennzeichnet, daß das Additiv (f) aus einer Verbindung besteht, ausgewählt unter der folgenden Gruppe:
(f1) einem chlorierten oder bromierten Epoxyharz, das ein Epoxyäquivalentgewicht zwischen 200 und 2000 besitzt und aus einem Glycidether besteht, erhalten, indem man mit Epichlorhydrin ein an dem oder den aromatischen Kern(en) chloriertes oder bromiertes Derivat umsetzt, entstammend einem Polyphenol, ausgewählt unter: der Familie der Bis(hydroxyphenyl)-alkane, wie Bis-2,2-(4-hydroxy-phenyl)propan, Bis-(4-hydroxy-phenyl)-methan, Bis-(4-hydroxy-phenyl)-methyl-phenyl-methan, Bis-(4-hydroxy-phenyl)-tolyl-methane; Resorcin; Hydrochinon; Brenzcatechin; 4,4'-Dihydroxy-diphenyl; und den Kondensationsprodukten der vorstehenden Phenole mit einem Aldehyd;
(f2) einem N,N'-Alkylen-bis-tetrabromphthalimid;

(f3) einem Bis-(allyloxydibromphenyl)-alkan der Formel

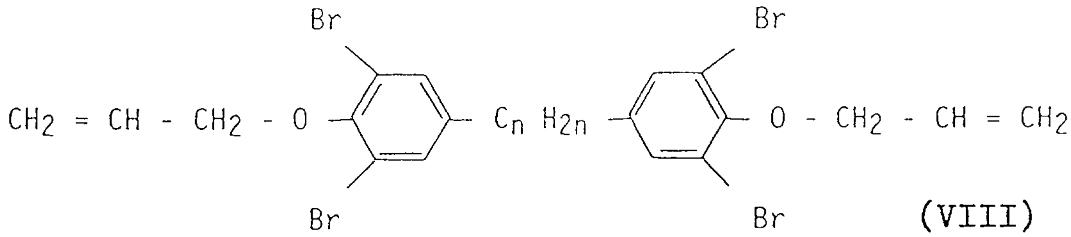

(VIII)

worin n eine ganze Zahl entsprechend 1, 2 oder 3 bedeutet;

(f4) einem nicht-halogenierten Epoxyharz, das ein Epoxyäquivalentgewicht zwischen 100 und 1000 besitzt und aus einem Glycidether besteht, erhalten, indem man mit Epichlorhydrin ein an dem oder den aromatischen Kern(en) nicht-chloriertes oder nicht-bromiertes Polyphenol aus der Gruppe der Phenole umsetzt, von denen zuvor in dem vorliegenden Anspruch im Hinblick auf die Definition des Harzes (f1) die Rede ist; und

(f5) einer Mischung von zwei oder mehr als zwei der vorstehend im vorliegenden Anspruch genannten Verbindungen (f1) bis (f4) mit Ausnahme all der Kombinationen, die lediglich aus (f2) oder/und (f3) bestehen.

**6.** Polymere gemäß einem der Ansprüche 1 bis 5, dadurch gekennzeichnet, daß das fakultative Reagens (c), wenn es verwendet wird, in Mengen eingesetzt wird, die weniger als 60% des Gesamtgewichts der Reagentien (a) + (b) betragen.

**7.** Polymere gemäß einem der Ansprüche 1 bis 6, dadurch gekennzeichnet, daß die fakultative Imidazolverbindung (d), wenn sie verwendet wird, in Mengen eingesetzt wird, die im Bereich von 0,005 bis 1 Gew.%, bezogen auf die Gesamtheit der Reagentien (a) + (b) + gegebenenfalls (c), liegen.

**8.** Polymere gemäß einem der Ansprüche 1 bis 7, dadurch gekennzeichnet, daß sie in Form von gehärteten Polymeren vorliegen, die in üblichen polaren, organischen Lösungsmitteln unlöslich sind und keine merkliche Erweichung unterhalb der Temperatur zeigen, bei der sie sich zu zersetzen beginnen.

**9.** Polymere gemäß einem der Ansprüche 1 bis 8, dadurch gekennzeichnet, daß sie in Form von in üblichen polaren, organischen Lösungsmitteln löslichen, wärmehärtbaren Präpolymeren (P) vorliegen und einen Erweichungspunkt bei einer Temperatur unterhalb 200 °C besitzen.

**Patentansprüche für folgenden Vertragsstaat : ES**

**1.** Verfahren zur Herstellung von Polymeren mit Imidgruppen, die in Form von in üblichen polaren, organischen Lösungsmitteln unlöslichen, gehärteten Polymeren vorliegen und unterhalb der Temperatur, bei der sie sich zu zersetzen beginnen, keine merkliche Erweichung zeigen, welches darin besteht, direkt bei einer Temperatur zwischen 50 und 300 °C das Gemisch der folgenden Bestandteile zu erhitzen:

(a) ein N,N'-Bis-imid oder eine Assoziation von mehreren Bis-imiden der Formel

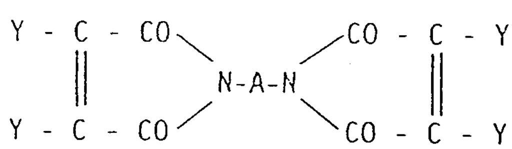

(I)

worin

die Symbole Y, identisch oder verschieden, jeweils H, $CH_3$ oder Cl bedeuten;

das Symbol A einen zweiwertigen Rest wiedergibt, ausgewählt aus der Gruppe der folgenden Reste: Cyclohexylen; Phenylene; 4-Methyl-1,3-phenylen; 2-Methyl-1,3-phenylen; 5-Methyl-1,3-phenylen; 2,5-Diethyl-3-methyl-1,4-phenylen; und den Resten der Formel

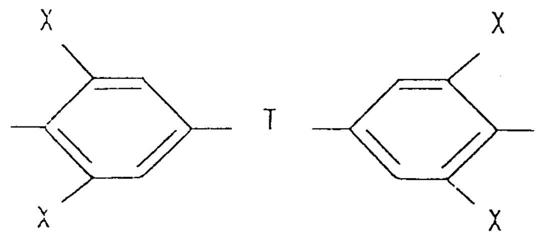

worin T für eine einfache Valenzbindung oder eine Gruppe $-CH_2-$ ;

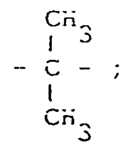

- O - ;

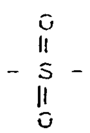 ; 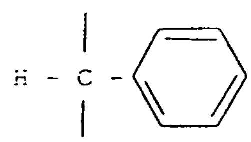 ; 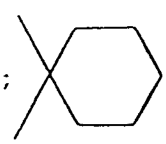 ;

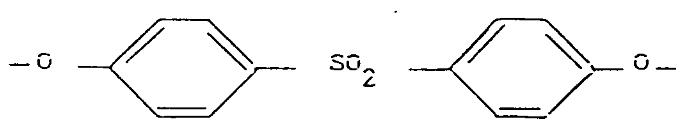

steht und die Symbole X, indentisch oder verschieden, jeweils ein Wasserstoffatom, einen Methyl-, Ethyl- oder Isopropylrest wiedergeben;

(b) ein oder mehrere sterisch gehinderte, biprimäre Diamine;

(c) gegebenenfalls ein oder mehrere nicht-halogenierte Monomere, die von einem Bis-imid der Formel (I) verschieden sind und eine oder mehrere polymerisierbare Kohlenstoff-Kohlenstoff-Doppelbindungen umfassen; und

(d) gegebenenfalls eine Verbindung vom Imidazol-Typ;

wobei das Verfahren durch die folgenden Merkmale gekennzeichnet ist:

Merkmal 1: das Reaktionsmilieu enthält als Aminreagens (b) ein oder mehrere sterisch gehinderte, biprimäre Diamine aus der folgenden Gruppe:

(i) den Species der allgemeinen Formel

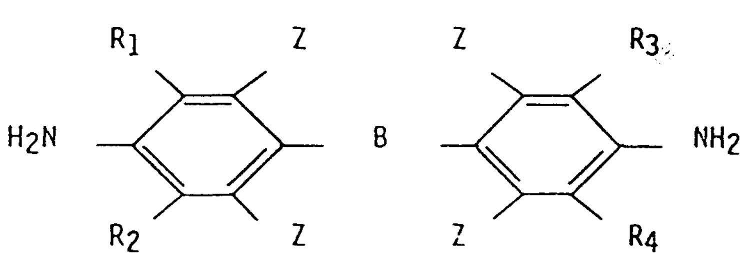

**(IV)**

worin die Symbole $R_1$, $R_2$, $R_3$ und $R_4$, identisch oder verschieden, jeweils eine Methyl-, Ethyl-, Propyl- oder Isopropylgruppe bedeuten;

die Symbole Z, identisch oder verschieden, jeweils ein Wasserstoffatom oder ein Chloratom bedeuten;

das Symbol B einen zweiwertigen Rest, ausgewählt unter den folgenden Resten: $-CH_2-$;

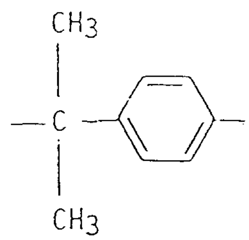 und 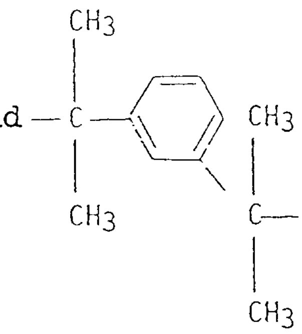 ,

wiedergibt;

(2i) und den Species der allgemeinen Formel

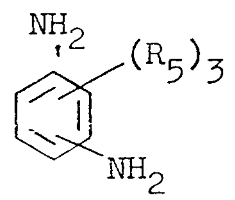 (III)

worin

die Aminoreste sich in meta- oder para-Stellung in bezug aufeinander befinden;

die Symbole $R_5$, identisch oder verschieden, jeweils einen Methyl-, Ethyl-, Propyl- oder Isopropylrest bedeuten;

Merkmal 2: das Reaktionsmilieu enthält außerdem zwei obligatorische Additive (e) und (f):

(e) bestehend aus einem oder mehreren substituierten Guanaminen der Formel

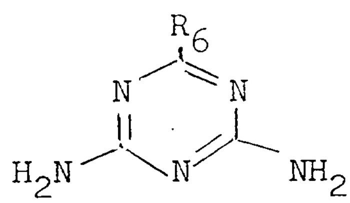 (V)

worin das Symbol $R_6$ bedeutet: einen linearen oder verzweigten Alkylrest mit 1 bis 12 Kohlenstoffatomen; einen Alkoxyrest mit 1 bis 12 Kohlenstoffatomen; einen gegebenenfalls durch 1 bis 3 Alkylreste mit 1 bis 3 Kohlenstoffatomen substituierten Phenylrest; einen Phenylalkylrest mit 1 bis 3 Kohlenstoffatomen im Alkylrest, dessen Benzolring gegebenenfalls durch 1 bis 3 Alkylreste mit 1 bis 3 Kohlenstoffatomen substituiert sein kann;

(f) bestehend aus einer Verbindung, ausgewählt unter den folgenden:

(f1) einem chlorierten oder bromierten Epoxyharz, das ein Epoxyäquivalentgewicht zwischen 200 und 2000 besitzt und das aus einem Glycidether besteht, erhalten, indem man mit Epichlorhydrin ein Derivat umsetzt, das an dem (oder den) aromatischen Kern(en) bromiert oder chloriert ist und einem Polyphenol, ausgewählt unter den folgenden, entstammt: den Bis-(hydroxyphenyl)-alkanen, dem Resorcin, dem Hydrochinon, dem Brenzcatechin, dem 4,4'-Dihydroxy-diphenyl und den Kondensationsprodukten dieser Phenole mit einem Aldehyd;

(f2) einem N,N'-Alkylen-bis-tetrahalogenphthalimid der Formel

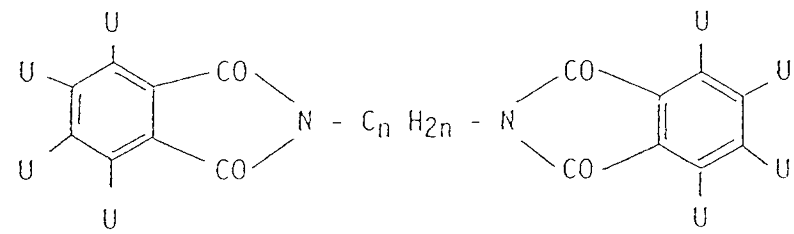

(VI)

worin

die Symbole U, identisch oder verschieden, jeweils ein Chlor- oder Bromatom bedeuten;

der Alkylenrest $-C_n H_{2n}-$ linear oder verzweigt sein kann;

n eine ganze Zahl entsprechend 1, 2, 3 oder 4 ist;

(f3) einem halogenierten Produkt der Formel

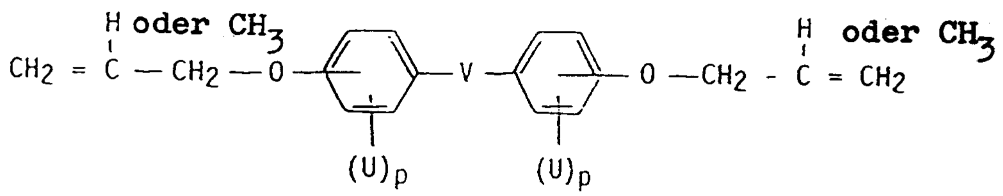

(VII)

worin

die Symbole U die vorstehend angegebene Bedeutung besitzen;

das Symbol V eine einfache Valenzbindung, einen linearen oder verzweigten Alkylenrest $-C_n H_{2n}-$,mit n entsprechend 1, 2, 3 oder 4, oder ein Sauerstoffatom bedeutet;

p für eine ganze Zahl entsprechend 2, 3 oder 4 steht;

(f4) einem nicht-halogenierten Epoxyharz, das ein Epoxyäquivalentgewicht zwischen 100 und 1000 besitzt und das aus einem Glycidether besteht, erhalten, indem man mit Epichlorhydrin ein Polyphenol umsetzt, das an dem oder den aromatischen Kern(en) nicht-chloriert oder -bromiert ist und einem Polyphenol entstammt, ausgewählt aus der Gruppe der vorstehend im Hinblick auf die Definition des Harzes (f1) angeführten Phenole; und

(f5) einem Gemisch von zwei oder mehr als zwei der angeführten Verbindungen (f1) bis (f4) miteinander,

ausgenommen all die Kombinationen, die lediglich aus (f2) oder/und (f3) bestehen;

wobei die Mengen an N,N'-Bis-imid(en) (a) und an sterisch gehindertem(n) Diamin(en) (b) derart ausgewählt sind, daß das Verhältnis r:

$$\frac{\text{Anzahl der Mole Bis-imid(e) (a)}}{\text{Anzahl der Mole Diamin(e) (b)}}$$

im Bereich von 1,5/1 bis 20/1 liegt; wobei die Menge des Additivs (e) 2% bis 30% des Gewichte des Gemisches Bis-imid(e) (a) + Diamin(e) (b) + Additiv (f) + gegebenenfalls Reagens (c) beträgt, die Menge des Additivs (f) 2 bis 30% des Gewichts des Gemisches Bis-imid(e) (a) + Diamin(e) (b) + gegebenenfalls Reagens (c) beträgt und die Menge des Chlors oder des Broms, die durch das Additiv (f) eingebracht sein kann, ausgedrückt durch den Gewichtsprozentanteil des Gesamtgemisches Bis-imid(e) (a) + Diamin(e) (b) + Additive (e) und (f) + fakultatives Reagens (c), höchstens 8% beträgt.

**2.** Verfahren gemäß Anspruch 1, dadurch gekennzeichnet, daß das Reagens (a) aus der folgenden Gruppe ausgewählt wird:

N,N'-Metaphenylen-bis-maleimid,

N,N'-Paraphenylen-bis-maleimid,

N,N'-4,4'-Diphenylmethan-bis-maleimid,

N,N'-4,4'-Diphenylether-bis-maleimid,
N,N'-4,4'-Diphenylsulfon-bis-maleimid,
N,N'-1,4-Cyclohexylen-bis-maleimid,
N,N'-4,4'-(1,1-Diphenyl-cyclohexan)-bis-maleimid,
N,N'-4,4'-(2,2-Diphenyl-propan)-bis-maleimid,
N,N'-4,4'-Triphenylmethan-bis-maleimid,
N,N'-2-Methyl-1,3-phenylen-bis-maleimid,
N,N'-4-Methyl-1,3-phenylen-bis-maleimid,
N,N'-5-Methyl-1,3-phenylen-bis-maleimid
und ihren Mischungen.

**3.** Verfahren gemäß einem der Ansprüche 1 und 2, dadurch gekennzeichnet, daß das Reagens (b) unter den folgenden ausgewählt wird:
4,4'-Diamino-3,3',5,5'-tetramethyl-diphenylmethan,
4,4'-Diamino-3,3',5,5'-tetraethyl-diphenylmethan,
4,4'-Diamino-3,5-dimethyl-3',5'-diethyl-diphenylmethan,
4,4'-Diamino-3,3'-diethyl-5,5'-dimethyl-diphenylmethan,
4,4'-Diamino-3,3',5,5'-tetraisopropyl-diphenylmethan,
4,4'-Diamino-3,3'-diisopropyl-5,5'-dimethyl-diphenylmethan,
Bis-1,4-(4-amino-3,5-dimethyl-$\alpha,\alpha$-dimethylbenzyl)-benzol,
Bis-1,3-(4-amino-3,5-dimethyl-$\alpha,\alpha$-dimethylbenzyl)-benzol,
1,3-Diamino-2,4-diethyl-6-methyl-benzol,
1,3-Diamino-2-methyl-4,6-diethyl-benzol
und ihren Mischungen.

**4.** Verfahren gemäß einem der Ansprüche 1 bis 3, dadurch gekennzeichnet, daß das Additiv (e) unter den folgenden ausgewählt wird:
2,4-Diamino-6-methyl-1,3,5-triazin,
2,4-Diamino-6-ethyl-1,3,5-triazin,
2,4-Diamino-6-butyl-1,3,5-triazin,
2,4-Diamino-6-nonyl-1,3,5-triazin,
2,4-Diamino-6-undecyl-1,3,5-triazin,
2,4-Diamino-6-methoxy-1,3,5-triazin,
2,4-Diamino-6-butoxy-1,3,5-triazin,
2,4-Diamino-6-phenyl-1,3,5-triazin,
2,4-Diamino-6-benzyl-1,3,5-triazin,
2,4-Diamino-6-(4-methyl)-phenyl-1,3,5-triazin
und ihren Mischungen.

**5.** Verfahren gemäß einem der Ansprüche 1 bis 4, dadurch gekennzeichnet, daß das Additiv (f) aus einer Verbindung besteht, ausgewählt unter der folgenden Gruppe:
(f1) einem chlorierten oder bromierten Epoxyharz, das ein Epoxyäquivalentgewicht zwischen 200 und 2000 besitzt und aus einem Glycidether besteht, erhalten, indem man mit Epichlorhydrin ein an dem oder den aromatischen Kern(en) chloriertes oder bromiertes Derivat umsetzt, entstammend einem Polyphenol, ausgewählt unter: der Familie der Bis(hydroxyphenyl)-alkane, wie Bis-2,2-(4-hydroxy-phenyl)propan, Bis-(4-hydroxy-phenyl)-methan, Bis-(4-hydroxy-phenyl)-methyl-phenyl-methan, Bis-(4-hydroxy-phenyl)-tolyl-methane; Resorcin; Hydrochinon; Brenzcatechin; 4,4'-Dihydroxy-diphenyl; und den Kondensationsprodukten der vorstehenden Phenole mit einem Aldehyd;
(f2) einem N,N'-Alkylen-bis-tetrabromphthalimid;

(f3) einem Bis-(allyloxydibromphenyl)-alkan der Formel

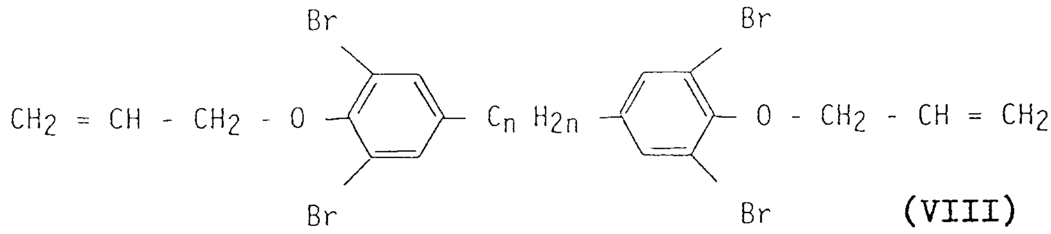

(VIII)

worin n eine ganze Zahl entsprechend 1, 2 oder 3 bedeutet;

(f4) einem nicht-halogenierten Epoxyharz, das ein Epoxyäquivalentgewicht zwischen 100 und 1000 besitzt und aus einem Glycidether besteht, erhalten, indem man mit Epichlorhydrin ein an dem oder den aromatischen Kern(en) nicht-chloriertes oder nicht-bromiertes Polyphenol aus der Gruppe der Phenole umsetzt, von denen zuvor in dem vorliegenden Anspruch im Hinblick auf die Definition des Harzes (f1) die Rede ist; und

(f5) einer Mischung von zwei oder mehr als zwei der vorstehend im vorliegenden Anspruch genannten Verbindungen (f1) bis (f4) mit Ausnahme all der Kombinationen, die lediglich aus (f2) oder/und (f3) bestehen.

**6.** Verfahren zur Herstellung von Polymeren mit Imidgruppen, die in Form von in üblichen polaren, organischen Lösungsmitteln löslichen, wärmehärtbaren Präpolymeren (P) vorliegen und einen Erweichungspunkt bei einer Temperatur unterhalb 200 °C besitzen, das darin besteht, direkt die Mischung der Bestandteile (a) + (b) + gegebenenfalls (c) + gegebenenfalls (d), die wie vorstehend in einem der Ansprüche 1 bis 3 definiert sind, bei einer Temperatur zwischen 50 und 180 °C bis zur Erzielung eines homogenen oder pastösen Produkts zu erhitzen,
wobei das Verfahren durch die folgenden Merkmale gekennzeichnet ist:
Merkmal 1: das Reaktionsmilieu enthält als Aminreagens (b) ein oder mehrere sterisch gehinderte biprimäre Amine aus der Gruppe, die durch die vorstehend in Anspruch 1 definierten Species (i) und (2i) gebildet wird,
Merkmal 2: das Reaktionsmilieu enthält außerdem zwei obligatorische Additive (e) und (f), die den vorstehenden Definitionen in einem der Ansprüche 1, 4 und 5 entsprechen.

**7.** Verfahren gemäß Anspruch 1, dadurch gekennzeichnet, daß es darin besteht, die Mischung der Ausgangsbestandteile zwischen 50 und 180 °C zu erhitzen, um zu einem ersten Zeitpunkt ein Präpolymeres (P) zu bilden, und danach die Härtung des Präpolymeren (P) durch Erhitzen auf eine Temperatur zwischen 150 und 300 °C vorzunehmen.

**8.** Verfahren gemäß einem der Ansprüche 1 bis 7, dadurch gekennzeichnet, daß das fakultative Reagens (c), wenn es verwendet wird, in Mengen eingesetzt wird, die weniger als 60% des Gesamtgewichts der Reagentien (a) + (b) betragen.

**9.** Verfahren gemäß einem der Ansprüche 1 bis 8, dadurch gekennzeichnet, daß die fakultative Imidazolverbindung (d), wenn sie verwendet wird, in Mengen eingesetzt wird, die im Bereich von 0,005 bis 1 Gew.%, bezogen auf die Gesamtheit der Reagentien (a) + (b) + gegebenenfalls (c), liegen.